(19) Europäisches Patentamt
European Patent Office
Office européen des brevets

(11) EP 4 660 275 A1

(12) EUROPEAN PATENT APPLICATION
published in accordance with Art. 153(4) EPC

(43) Date of publication:
**10.12.2025 Bulletin 2025/50**

(21) Application number: **24750368.3**

(22) Date of filing: **31.01.2024**

(51) International Patent Classification (IPC):
***C09J 201/10*** (2006.01) ***C08G 59/40*** (2006.01)
***C08G 59/50*** (2006.01) ***C08K 3/013*** (2018.01)
***C08K 3/20*** (2006.01) ***C08K 3/22*** (2006.01)
***C08K 5/17*** (2006.01) ***C08L 63/00*** (2006.01)
***C09J 9/00*** (2006.01) ***C09J 11/04*** (2006.01)
***C09J 11/06*** (2006.01) ***C09J 163/00*** (2006.01)
***C09J 171/02*** (2006.01) ***C09J 201/00*** (2006.01)
***C09K 5/14*** (2006.01) ***H01M 10/60*** (2014.01)
***H01M 10/65*** (2014.01) ***H01M 10/653*** (2014.01)

(52) Cooperative Patent Classification (CPC):
**C08G 59/20; C08G 59/40; C08G 59/50; C08K 3/013; C08K 3/20; C08K 3/22; C08K 5/103; C08K 5/17; C08L 63/00; C09J 9/00; C09J 11/04; C09J 11/06; C09J 163/00; C09J 171/02; C09J 175/04;** (Cont.)

(86) International application number:
**PCT/JP2024/003186**

(87) International publication number:
**WO 2024/162419 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:
**31.01.2023 JP 2023013583**
**31.01.2023 JP 2023013584**
**08.03.2023 JP 2023035923**
**31.03.2023 JP 2023059531**
**31.03.2023 JP 2023059573**
**29.09.2023 JP 2023170651**

(71) Applicant: **Sekisui Chemical Co., Ltd.**
**Osaka-shi, Osaka 530-8565 (JP)**

(72) Inventors:
- **MORIMOTO, Kohei**
  **Mishima-gun, Osaka 618-0021 (JP)**
- **FURUKAWA, Atsushi**
  **Mishima-gun, Osaka 618-0021 (JP)**
- **IWAMOTO, Tatsuya**
  **Mishima-gun, Osaka 618-0021 (JP)**
- **YOSHIOKA, Tetsuro**
  **Mishima-gun, Osaka 618-0021 (JP)**
- **KOBAYASHI, Yusuke**
  **Mishima-gun, Osaka 618-0021 (JP)**
- **IINO, Tatsuya**
  **Mishima-gun, Osaka 618-0021 (JP)**

(74) Representative: **Ter Meer Steinmeister & Partner Patentanwälte mbB**
**Nymphenburger Straße 4**
**80335 München (DE)**

# (54) CURABLE HEAT-CONDUCTIVE ADHESIVE AGENT

(57) The curable thermally conductive adhesive of the present invention comprises a curable binder and a thermally conductive filler, wherein a cured product obtained by curing the curable thermally conductive adhesive at 60°C for 24 hours has an adhesion of 0.3 MPa or more, and the following expression (1) is satisfied when G' represents a storage elastic modulus, tan δ represents a loss tangent, and the storage elastic modulus and the loss tangent are obtained by subjecting the cured product to dynamic viscoelasticity measurement under conditions having a temperature of 25°C and a frequency of 0.1 Hz. The present invention can provide a curable thermally conductive adhesive capable of forming a thermally conductive member that has strong adhesion to an adherend and unlikely peels off from the adherend even after undergoing thermal cycling between low and high temperatures.

EP 4 660 275 A1

Expression (1): $\log10(G') < 4.29 \times \tan\delta + 6$

Fig. 1

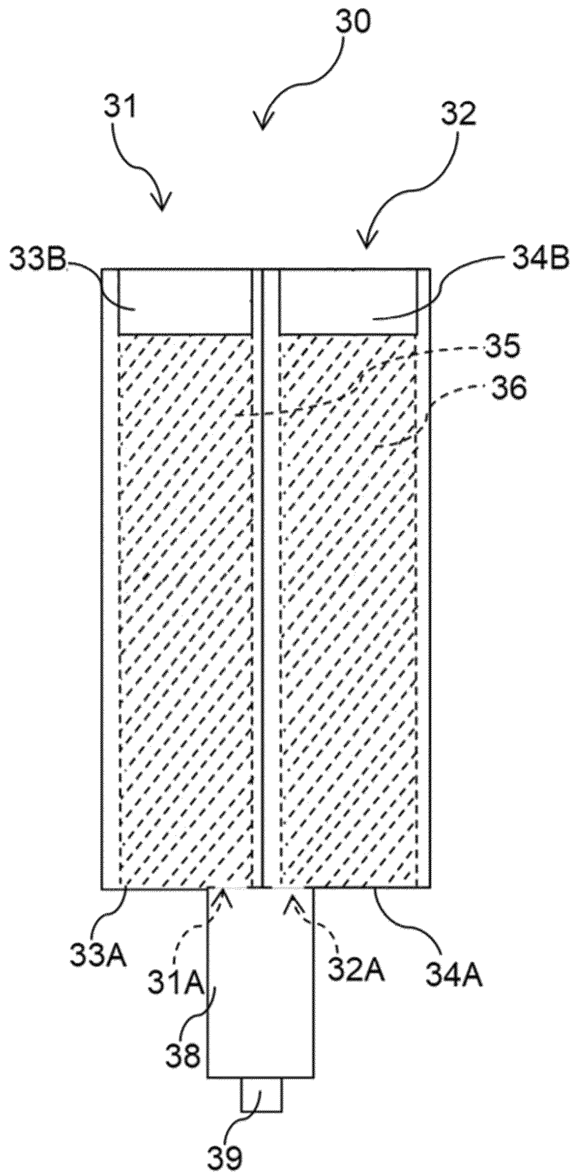


(52) Cooperative Patent Classification (CPC): (Cont.)
**C09J 201/00; C09J 201/10; C09K 5/14; H01M 10/60; H01M 10/613; H01M 10/625; H01M 10/647; H01M 10/65; H01M 10/651; H01M 10/653; H01M 10/6554;** Y02E 60/10

## Description

### Technical Field

The present invention relates to curable thermally conductive adhesive.

### Background Art

Thermally conductive resin compositions that are curable and liquid are widely known, and, for example, such a thermally conductive resin composition is provided between a heating element and a heat dissipating element, then cured to form a cured product, and used as a thermally conductive member such as a heat dissipating gap filler for transferring heat produced by the heating element to the heat dissipating element.

In recent years, given the market backdrop of steadily growing production of electric vehicles, there has been an increasing demand for two-component, room temperature-curable, thermally conductive resin compositions for lithium-ion batteries (LiBs). Specifically, in lithium-ion batteries, from the viewpoint of heat dissipation, a thermally conductive resin composition is often provided between components such as a battery cell, a battery module, and a battery pack in order to secure the components and enhance heat dissipation. Several techniques relating to such thermally conductive compositions have been reported.

For example, Patent Literature 1 discloses an invention relating to a low thermal resistance, reliable, thermally conductive composition comprising a tri- or higher functional epoxy resin having no aromatic skeleton, a bi- or lower functional liquid epoxy resin, a curing agent, a silane compound having no functional group other than an alkoxy group, and a thermally conductive filler.

Patent Literature 2 discloses an invention relating to a thermally conductive curable composition comprising a first part and a second part as a thermal interface material having a high thermal conductivity, wherein the first part comprises a catalyst, a ceramic filler mixture, a low-volatility organic liquid, and water, and the second part comprises a silyl-modified reactive polymer, a low-volatility organic liquid, and a ceramic filler mixture.

Patent Literature 3 discloses an invention relating to a urethane-based curable composition that has excellent adhesion to a substrate, and the adhesion of which barely deteriorates over time, wherein the curable composition comprises a polyol including hydrogenated polybutadiene polyol, a polyisocyanate, a phosphoric acid ester having a specific structure, an inorganic filler, and a plasticizer, and has an inorganic filler content of 83 to 93% by weight.

### Citation List

#### Patent Literature

PTL1: JP 2022-116587 A
PTL2: JP 2022-521790 A
PTL3: JP 2023-47595 A

### Summary of Invention

#### Technical Problem

A thermally conductive member formed by curing a conventional thermally conductive composition is used, for example, between adherends such as a heating element and a heat dissipating element as described above, but in the environment where the thermally conductive member is actually used, the thermally conductive member may be unable to conform to changes to the gap between the adherends resulting from exposure to thermal cycling between low and high temperatures, and peel off from the adherends. As a result, the strength and the heat dissipating properties as a structural component are impaired, and the thermally conductive member fails to play its intended role of securing the components and enhancing heat dissipation.

Accordingly, an object of the present invention is to provide a curable thermally conductive adhesive capable of forming a thermally conductive member that has strong adhesion to an adherend and unlikely peels off from the adherend even after undergoing thermal cycling between low and high temperatures.

Solution to Problem

The inventors conducted diligent study. As a result, the inventors found that the problems can be solved by a curable thermally conductive adhesive comprising a curable binder and a thermally conductive filler, wherein a cured product of the adhesive has at least a certain level of adhesion, and storage elastic modulus G' and loss tangent tan δ obtained by dynamic viscoelasticity measurement of the cured product under specific conditions satisfy a specific relational expression, and accomplished the present invention.

In addition, the inventors also found that the problems can be solved by a curable thermally conductive adhesive comprising a curable binder and a thermally conductive filler, wherein a cured product of the adhesive has at least a certain level of adhesion, and the cured product has at least a certain level of shear elongation, and accomplished the present invention.

The present invention provides [1] to [20] below.

[1] A curable thermally conductive adhesive comprising a curable binder and a thermally conductive filler,

a cured product obtained by curing the curable thermally conductive adhesive at 60°C for 24 hours having an adhesion of 0.3 MPa or more, and

the following expression (1) being satisfied when G' represents a storage elastic modulus, tan δ represents a loss tangent, and the storage elastic modulus and the loss tangent are obtained by subjecting the cured product to dynamic viscoelasticity measurement under conditions having a temperature of 25°C and a frequency of 0.1 Hz:

$$\text{Expression (1): } \log10(G') < 4.29 \times \tan\delta + 6$$

[2] A curable thermally conductive adhesive comprising a curable binder and a thermally conductive filler,

a cured product obtained by curing the curable thermally conductive adhesive at 60°C for 24 hours having an adhesion of 0.3 MPa or more, and

the cured product having a thickness of 2 mm having a shear elongation of 0.25 mm or more measured using a cationic electrodeposition coated substrate and a polyethylene terephthalate (PET) substrate.

[3] The curable thermally conductive adhesive according to [1] or [2], wherein the cured product having a thickness of 2 mm has a shear elongation of 10.0 mm or less measured using a cationic electrodeposition coated substrate and a polyethylene terephthalate (PET) substrate.

[4] The curable thermally conductive adhesive according to any one of [1] to [3], wherein the cured product obtained by curing the curable thermally conductive adhesive at 60°C for 24 hours has an adhesion of 5 MPa or less.

[5] The curable thermally conductive adhesive according to any one of [1] to [4], wherein

the cured product having a thickness of 2 mm has a shear elongation of 0.29 mm or more and 3.71 mm or less measured using a cationic electrodeposition coated substrate and a polyethylene terephthalate (PET) substrate, and

the cured product obtained by curing the curable thermally conductive adhesive at 60°C for 24 hours has an adhesion of 0.43 MPa or more and 3.49 MPa or less.

[6] The curable thermally conductive adhesive according to any one of [1] to [5], wherein a failure mode of the cured product confirmed in shear elongation measurement of the cured product having a thickness of 2 mm measured using a cationic electrodeposition coated substrate and a polyethylene terephthalate (PET) substrate is cohesive failure.

[7] The curable thermally conductive adhesive according to any one of [1] to [6], wherein a gelation point at which values of a storage elastic modulus and a loss elastic modulus are equal is confirmed at no less than 120 minutes from the beginning of measurement when measured using a rheometer at a constant temperature of 50°C.

[8] The curable thermally conductive adhesive according to any one of [1] to [7], wherein the curable binder is a binder comprising an epoxy resin and a curing agent, a binder comprising an organic polymer having a hydrolyzable silyl group, or a binder comprising a polyol and a polyisocyanate.

[9] The curable thermally conductive adhesive according to [8], wherein the epoxy resin has a molecular weight of 200 or more.

[10] The curable thermally conductive adhesive according to [8] or [9], wherein the curing agent has a molecular weight of 300 or more.

[11] The curable thermally conductive adhesive according to any one of [8] to [10], wherein the curing agent is an amine curing agent.
[12] The curable thermally conductive adhesive according to any one of [8] to [11], wherein an equivalent ratio (NH/Ep ratio) of active hydrogen atoms of amino group contained in the amine curing agent to epoxy groups contained in the epoxy resin is more than 1 and 2.7 or less.
[13] The curable thermally conductive adhesive according to [8], wherein the organic polymer having a hydrolyzable silyl group has a number average molecular weight of 6000 or more.
[14] The curable thermally conductive adhesive according to [8] or [13], wherein the organic polymer having a hydrolyzable silyl group is a polyalkylene oxide having a hydrolyzable silyl group.
[15] The curable thermally conductive adhesive according to any one of [1] to [14], wherein a content of the thermally conductive filler is 85% by volume or less.
[16] The curable thermally conductive adhesive according to any one of [1] to [15], comprising a first agent which comprises a base resin of the binder and with which a first container is filled, and a second agent which comprises a curing agent that cures when mixed with the first agent and with which a second container is filled.
[17] A container set, which is filled with the curable thermally conductive adhesive according to [16], and comprises the first container filled with the first agent and the second container filled with the second agent.
[18] A thermally conductive member formed of a cured product of the curable thermally conductive adhesive according to any one of [1] to [16].
[19] A battery assembly comprising the thermally conductive member according to [18].
[20] Use of the curable thermally conductive adhesive according to any one of [1] to [16] as at least one of a gap filler between battery cells, a gap filler between a battery cell and a module housing, a gap filler between a battery module and a battery pack housing, or a gap filler between a battery cell and a battery pack housing.

Advantageous Effects of Invention

The present invention can provide a curable thermally conductive adhesive capable of forming a thermally conductive member that has strong adhesion to an adherend and unlikely peels off from the adherend even after undergoing thermal cycling between low and high temperatures.

Brief Description of Drawings

[Fig. 1] Fig. 1 is a schematic diagram showing a container set according to one embodiment.
[Fig. 2] Fig. 2 is a schematic diagram showing a container set according to one embodiment.
[Fig. 3] Fig. 3 is a perspective diagram showing a representative configuration of a battery module according to the present invention.
[Fig. 4] Fig. 4 is a perspective diagram showing a representative configuration of a battery cell contained in a battery module.
[Fig. 5] Fig. 5 is a perspective diagram showing a battery assembly having a cell-to-pack structure.
[Fig. 6] Fig. 6 is a diagram showing a relationship between the data of Examples and Comparative Examples and expression (1).

Description of Embodiments

[Curable thermally conductive adhesive]

The curable thermally conductive adhesive of the present invention is a curable thermally conductive adhesive containing a curable binder and a thermally conductive filler, a cured product obtained by curing the curable thermally conductive adhesive at 60°C for 24 hours has an adhesion of 0.3 MPa or more, and storage elastic modulus G' and loss tangent tan $\delta$ obtained by subjecting the cured product to dynamic viscoelasticity measurement under conditions having a temperature of 25°C and a frequency of 0.1 Hz satisfy the following expression (1):

$$\text{Expression (1): } \log10(G') < 4.29 \times \tan\delta + 6$$

In addition, the curable thermally conductive adhesive according to another embodiment of the present invention is a curable thermally conductive adhesive containing a curable binder and a thermally conductive filler, a cured product

obtained by curing the curable thermally conductive adhesive at 60°C for 24 hours has an adhesion of 0.3 MPa or more, and the cured product having a thickness of 2 mm has a shear elongation of 0.25 mm or more measured using a cationic electrodeposition coated substrate and a polyethylene terephthalate (PET) substrate.

Below, the curable thermally conductive adhesives of the present invention (hereinafter simply referred to as an "adhesive") will now be described in detail.

<Relational expression between storage elastic modulus G' and loss tangent tan δ>

The adhesive of the present invention satisfies the following expression (1) when G' represents a storage elastic modulus, tan δ represents a loss tangent, and the storage elastic modulus and the loss tangent are obtained when subjecting a cured product obtained by curing the adhesive at 60°C for 24 hours to dynamic viscoelasticity measurement under conditions having a temperature of 25°C and a frequency of 0.1 Hz:

$$\text{Expression (1): } \log 10(G') < 4.29 \times \tan \delta + 6$$

In expression (1), log10(G') is the logarithm of storage elastic modulus G' having a base of 10. The unit of storage elastic modulus G' is Pascal.

Expression (1) indicates that log10(G') is smaller than the value of "$4.29 \times \tan \delta + 6$". When expression (1) is not satisfied, the thermally conductive member formed by curing the adhesive is unable to conform to changes to the gap between adherends resulting from exposure to thermal cycling between low and high temperatures, and likely peels off from the adherends.

That is to say, when expression (1) is satisfied, the thermally conductive member formed by curing the adhesive unlikely peels off from the adherends during thermal cycling between low and high temperatures. The reason therefor is conjectured as follows:

When the storage elastic modulus of the thermally conductive member formed by curing the adhesive is excessive, sufficient flexibility is lost, thus the thermally conductive member is unable to conform to changes to the gap between adherends during thermal cycling between low and high temperatures in the environment where the thermally conductive member is actually used, and peeling likely occurs at the interface between the adherends and the thermally conductive member. This results in impaired heat dissipating properties and impaired strength as a structural component. Accordingly, the storage elastic modulus of the cured product needs to be lowered to a certain level. In addition, prompt stress relaxation is required for the cured product to conform to the temperature changes of thermal cycling between low and high temperatures. Accordingly, in addition to regulating the storage elastic modulus as above, tan δ needs to be somewhat large. Thus, it is believed necessary that the storage elastic modulus and tan δ satisfy the specific relational expressed represented by expression (1).

Concerning the thermally conductive adhesive of the present invention, storage elastic modulus G' and loss tangent tan δ preferably satisfy the following requirements from the viewpoint of preventing peeling from adherends during thermal cycling.

That is to say, when tan δ is less than 0.5, storage elastic modulus G' is preferably less than $3\times10^7$ Pa, when tan δ is 0.5 or more and less than 0.6, storage elastic modulus G' is preferably less than $2.83\times10^8$ Pa, and when tan δ is 0.6 or more, storage elastic modulus G' is preferably less than $1\times10^9$ Pa.

Storage elastic modulus G' and tan δ can be regulated by, for example, the molecular structure, such as molecular weight, of the curable binder and the contents of the thermally conductive filler and additives, such as a dispersant, which are contained in the adhesive.

<Shear elongation>

Concerning the adhesive of the present invention, a cured product obtained by curing the adhesive at 60°C for 24 hours has a shear elongation of 0.25 mm or more. Shear elongation refers to the shear elongation of the cured product having a thickness of 2 mm measured using a cationic electrodeposition coated substrate and a polyethylene terephthalate (PET) substrate. When the shear elongation is less than 0.25 mm, the thermally conductive member formed by curing the adhesive is unable to conform to changes to the gap between adherends resulting from exposure to thermal cycling between low and high temperatures, and likely peels off from the adherends.

From the viewpoint of enhancing conformability to changes to the gap between adherends, the shear elongation is preferably 0.29 mm or more, preferably 0.30 mm or more, preferably 0.31 mm or more, more preferably 0.5 mm or more, more preferably 0.94 mm or more, even more preferably 1.0 mm or more, even more preferably 2.0 mm or more, and even more preferably 3.0 mm or more. From the viewpoint of ensuring at least a certain level of adhesion to adherends, the shear elongation is preferably 10.0 mm or less, more preferably 5.0 mm or less, more preferably 4.0 mm or less, and more

preferably 3.71 mm or less. Accordingly, the shear elongation is preferably 0.25 mm or more and 10.0 mm or less, preferably 0.29 mm or more and 5.0 mm or less, preferably 0.30 mm or more and 4.0 mm or less, preferably 0.31 mm or more and 3.71 mm or less, and more preferably 0.94 mm or more and 3.71 mm or less.

The shear elongation is measured by a tensile shear test and, specifically, is measured from a cured product (test piece) obtained by applying the adhesive between two substrates and curing the adhesive at 60°C for 24 hours. That is to say, the shear elongation is the elongation of the cured product (test piece) measured until the cured product (test piece) serving as a bonded joint breaks due to the load (shear stress) acting to displace the substrates in opposite directions, and means the amount of deformation (length: mm) in the longitudinal direction of the cured product (test piece) from the beginning of measurement until breaking.

One of the two substrates used is polyethylene terephthalate (PET), and the other substrate is a cationic electrodeposition coated substrate. A usable cationic electrodeposition coated substrate may be, for example, "SPCC-SD" manufactured by Nippon Testpanel Co., Ltd.

The shear elongation can be regulated by, for example, the molecular structure, such as molecular weight, of the curable binder and the contents of the thermally conductive filler and additives, such as a dispersant, which are contained in the adhesive.

The failure mode of the cured product confirmed in the tensile shear test is preferably cohesive failure. Due to the failure mode being cohesive failure, the adhesive can suitably secure adherends such as a heating element and a heat dissipating element, and deterioration of strength as a structural component is readily suppressed.

<Adhesion>

Concerning the adhesive of the present invention, the cured product obtained by curing the adhesive at 60°C for 24 hours has an adhesion of 0.3 MPa or more. When the adhesion is less than 0.3 MPa, it is difficult for the cured product formed of the adhesive to secure various components that form a battery structure, such as a heating element and a heat dissipating element, with suitable adhesion, resulting in peeling of the cured product, and heat dissipating properties may be impaired. From the viewpoint of securing various components with favorable adhesion, the adhesion is preferably 0.4 MPa or more, more preferably 0.43 MPa or more, more preferably 0.6 MPa or more, more preferably 0.68 MPa or more, even more preferably 1 MPa or more, even more preferably 2 MPa or more, and even more preferably 2.41 MPa or more.

From the viewpoint of, for example, ensuring the stretchability of the cured product or removability from various components during recycling, the adhesion is preferably 5 MPa or less, more preferably 4 MPa or less, more preferably 3.49 MPa or less, and more preferably 3.18 MPa or less.

Accordingly, the adhesion is, for example, preferably 0.3 MPa or more and 5 MPa or less, more preferably 0.4 MPa or more and 4 MPa or less, more preferably 0.43 MPa or more and 3.49 MPa or less, and more preferably 0.6 MPa or more and 3.18 MPa or less.

The adhesion of the cured product of the adhesive means tensile shear strength, which is the breaking strength of the cured product measured by a tensile shear test similar to the measurement of shear elongation described above.

<Gelation point>

When the adhesive of the present invention is measured using a rheometer at a constant temperature of 50°C, the gelation point at which the storage elastic modulus and the loss elastic modulus are equal is preferably confirmed at no less than 60 minutes from the beginning of measurement. The curable thermally conductive composition that has a gelation point confirmed at no less than 60 minutes from the beginning of measurement has excellent cleanability when the adhesive is removed from adherends as necessary after being applied to the adherends. The gelation point is an index for the curability of the adhesive, and it is believed that a longer time until the gelation point is confirmed means a slower curing speed and thus higher cleanability. In particular, in the case of an adhesive exhibiting a high adhesion of more than 1.0 MPa, a long time to the gelation point is necessary to increase cleanability. This is because, after curing, cleanability depends on the hardness (storage elastic modulus) of the adhesive and, thus, from the viewpoint of attaining a heat dissipating adhesive having high strength and high cleanability, retarding the gelation point is preferable.

When measured using a rheometer at a constant temperature of 50°C, the time from the beginning of measurement until the gelation point is confirmed is, from the viewpoint of enhancing cleanability, preferably 100 minutes or more, more preferably 120 minutes or more, more preferably 130 minutes or more, and more preferably 140 minutes or more, and, from the viewpoint of ensuring a certain level of adhesion to adherends, preferably 300 minutes or less, more preferably 200 minutes or less, and more preferably 150 minutes or less.

The gelation point of the adhesive can be regulated by the composition of the curable binder contained in the adhesive (e.g., the equivalent ratio of resin to curing agent), the kind of catalyst, and the like.

The gelation point is the point at which the storage elastic modulus and the loss elastic modulus are equal when measured using a rheometer at a constant temperature of 50°C.

The method for measuring the time at which the gelation point appears is as described in the Examples.

<Curable binder>

The adhesive of the present invention contains a curable binder. The curable binder forms a matrix resin by being cured. The thermally conductive member obtained by curing the adhesive has a structure in which a thermally conductive filler is dispersed in a matrix resin.

The curable binder may be thermally curable, photo-curable, or moisture-curable, and is preferably thermally curable or moisture-curable. The binder may be any of a one-component curable type and a two-component curable type, and is preferably a two-component curable type.

The two-component curable type is used by mixing a first agent and a second agent, and curing is initiated by mixing the first agent and the second agent. In the case of the two-component curable type, for example, the first agent may contain a base resin, and the second agent may contain a curing agent. Here, a curing agent is preferably used that cures when mixed with the base resin of the first agent. Also, a curing agent is preferable that can cure at room temperature (25°C) when mixed with the base resin of the first agent.

The curable binder is not particularly limited as long as it can cure and form a matrix resin, is preferably any of a silicone-based binder, an epoxy-based binder, a urethane-based binder, an acryl-based binder, and an organic polymer having a hydrolyzable silyl group, and among these, more preferably an epoxy-based binder, a urethane-based binder, a silicone-based binder, or an organic polymer having a hydrolyzable silyl group, even more preferably an epoxy-based binder or an organic polymer having a hydrolyzable silyl group, and yet more preferably an organic polymer having a hydrolyzable silyl group.

From the viewpoint of increasing the above-described adhesion and shear elongation and regulating expression (1) in the dynamic viscoelasticity measurement to the desired range, the curable binder is preferably a binder containing an epoxy resin and a curing agent, a binder containing an organic polymer having a hydrolyzable silyl group, or a binder containing a polyol and a polyisocyanate.

(Epoxy-based binder)

The epoxy-based binder may be composed of an epoxy resin as a base resin and a curing agent. Accordingly, in the case of a two-component curable type, the first agent may contain an epoxy resin, and the second agent may contain a curing agent. Below, a case where an epoxy-based binder is used as the binder will now be described in detail.

(Epoxy resin)

The epoxy resin is a compound having one or more epoxy groups. The epoxy resin may be a polyfunctional epoxy resin having two or more epoxy groups, or a monofunctional epoxy resin having one epoxy group. Due to the epoxy resin contained in the adhesive, the adhesion of the cured product is readily regulated to a suitable range.

The adhesive preferably contains at least a polyfunctional epoxy resin. Due to the polyfunctional epoxy resin contained in the adhesive, crosslinks can be suitably formed, and adhesion is readily increased.

More preferably, the adhesive further contains a monofunctional epoxy resin in addition to the polyfunctional epoxy resin. Due to the monofunctional epoxy resin further contained in the adhesive, an excessive crosslinking density after curing is prevented, and thus elongation is readily enhanced.

When a polyfunctional epoxy resin and a monofunctional epoxy resin are used in combination, the mass ratio of the monofunctional epoxy resin to the polyfunctional epoxy resin (monofunctional/polyfunctional) is preferably 10/90 or more and 90/10 or less, more preferably 10/90 or more and 70/30 or less, even more preferably 15/85 or more and 50/50 or less, and even more preferably 15/85 or more and 40/60 or less.

The polyfunctional epoxy resin may be a bifunctional or trifunctional epoxy resin, and a bifunctional epoxy resin is preferably used. Specific examples of the polyfunctional epoxy resin include epoxy resins having an aromatic skeleton, such as phenol novolac epoxy resins, resorcinol epoxy resins, epoxy resins having a bisphenol skeleton, epoxy resins having a naphthalene skeleton, epoxy resins having a fluorene skeleton, epoxy resins having a biphenyl skeleton, epoxy resins having a bi(glycidyloxyphenyl)methane skeleton, epoxy resins having a xanthene skeleton, epoxy resins having an anthracene skeleton, and epoxy resins having a pyrene skeleton. Also, the epoxy resin may be an aliphatic epoxy resin.

Examples of the epoxy resins having a bisphenol skeleton include epoxy resins having a bisphenol A, bisphenol F, or bisphenol S type bisphenol skeleton.

Examples of the resorcinol epoxy resins include resorcinol diglycidyl ether.

Examples of the epoxy resins having a naphthalene skeleton include 1,2-diglycidylnaphthalene, 1,5-diglycidylnaphthalene, 1,6-diglycidylnaphthalene, 1,7-diglycidylnaphthalene, 2,7-diglycidylnaphthalene, triglycidylnaphthalene, and 1,2,5,6-tetraglycidylnaphthalene.

Examples of the epoxy resins having a fluorene skeleton include 9,9-bis(4-glycidyloxyphenyl)fluorene, 9,9-bis(4-glycidyloxy-3-methylphenyl)fluorene, 9,9-bis(4-glycidyloxy-3-chlorophenyl)fluorene, 9,9-bis(4-glycidyloxy-3-bromophenyl)fluorene, 9,9-bis(4-glycidyloxy-3-fluorophenyl)fluorene, 9,9-bis(4-glycidyloxy-3-methoxyphenyl)fluorene, 9,9-bis(4-glycidyloxy-3,5-dimethylphenyl)fluorene, 9,9-bis(4-glycidyloxy-3,5-dichlorophenyl)fluorene, and 9,9-bis(4-glycidyloxy-3,5-dibromophenyl)fluorene.

Examples of the epoxy resins having a biphenyl skeleton include 4,4'-diglycidylbiphenyl and 4,4'-diglycidyl-3,3',5,5'-tetramethylbiphenyl. Examples of the epoxy resins having a bi(glycidyloxyphenyl)methane skeleton include 1,1'-bi(2,7-glycidyloxynaphthyl)methane, 1,8'-bi(2,7-glycidyloxynaphthyl)methane, 1,1'-bi(3,7-glycidyloxynaphthyl)methane, 1,8'-bi(3,7-glycidyloxynaphthyl)methane, 1,1'-bi(3,5-glycidyloxynaphthyl)methane, 1,8'-bi(3,5-glycidyloxynaphthyl)methane, 1,2'-bi(2,7-glycidyloxynaphthyl)methane, 1,2'-bi(3,7-glycidyloxynaphthyl)methane, and 1,2'-bi(3,5-glycidyloxynaphthyl)methane.

Examples of the epoxy resins having a xanthene skeleton include 1,3,4,5,6,8-hexamethyl-2,7-bis-glycidylmethoxy-9-phenyl-9H-xanthene. Examples of the epoxy resins having an anthracene skeleton include those having one or more anthracene skeletons and two or more epoxy groups or glycidyl groups per molecule.

Examples of the epoxy resins having a pyrene skeleton includes those having one or more pyrene skeletons and two or more epoxy groups or glycidyl groups per molecule.

Examples of the aliphatic epoxy resin include polyalkylene glycol diglycidyl ethers such as butanediol diglycidyl ether, neopentyl glycol diglycidyl ether, polyethylene glycol diglycidyl ether, polypropylene glycol diglycidyl ether, and polytetramethylene glycol diglycidyl ether.

The aliphatic epoxy resin may be an epoxy resin having an alicyclic skeleton, and examples include epoxy resins having a dicyclopentadiene skeleton and epoxy resins having an adamantane skeleton. Examples of the epoxy resins having a dicyclopentadiene skeleton include dicyclopentadiene dioxide. Examples of the epoxy resins having an adamantane skeleton include 1,3-bis(4-glycidyloxyphenyl)adamantane and 2,2-bis(4-glycidyloxyphenyl)adamantane.

In addition, hydrogenated or modified products of the epoxy resins exemplified above can also be used as epoxy resins.

Among the above polyfunctional epoxy resins, from the viewpoint of enhancing adhesive strength and mechanical strength, epoxy resins having an aromatic ring are preferable, in particular, epoxy resins having a phenyl group are more preferable, and, in particular, bisphenol-type epoxy resins that are epoxy resins having a bisphenol skeleton are even more preferable.

One polyfunctional epoxy resin may be used singly, or two or more may be used in combination.

Examples of the monofunctional epoxy resin include monofunctional epoxy resins having an aromatic ring such as phenyl-based glycidyl ethers exemplified by phenyl glycidyl ether and alkylphenyl glycidyl ethers represented by 4-t-butylphenyl glycidyl ether, cresyl glycidyl ether, and nonylphenyl glycidyl ether, 1-glycidylnaphthalene and 2-glycidylnaphthalene. The monofunctional epoxy resin having an aromatic ring is more preferably an epoxy resin having a phenyl group.

The monofunctional epoxy resin, from the viewpoint of high safety of feedstocks and from the viewpoint of satisfying expression (1) in the dynamic viscoelasticity measurement of the cured product, is also preferably an aliphatic monofunctional epoxy resin, and specific examples include glycidyl ethers of aliphatic alcohols. Here, the aliphatic alcohol may have a branched structure or a linear structure and, from the viewpoint of enhancing elongation, preferably has a linear structure. The aliphatic alcohol may have, for example, about 4 to 24 carbon atoms and, from the viewpoint of enhancing elongation, preferably has 10 to 20 carbon atoms. From the viewpoint of enhancing elongation, the aliphatic alcohol is preferably a saturated aliphatic alcohol. Specific examples of the glycidyl ethers of aliphatic alcohols include butyl glycidyl ether, decyl glycidyl ether, lauryl glycidyl ether, myristyl glycidyl ether, cetyl glycidyl ether, and stearyl glycidyl ether. The monofunctional epoxy resin may be different from those described above, and examples include monofunctional epoxy resins having a glycidyl group but not having an ether group such as 1,2-epoxybutane or propylene oxide.

The monofunctional epoxy resin to be used, from the viewpoint of enhancing elongation, is preferably an aliphatic monofunctional epoxy resin, and, in particular, is preferably a glycidyl ether of an aliphatic alcohol.

One monofunctional epoxy resin may be used singly, or two or more may be used in combination.

The epoxy resin preferably contains an epoxy resin having an aromatic ring or, in particular, a phenyl group. The epoxy resin having an aromatic ring such as a phenyl group may be a monofunctional epoxy resin, or may be a polyfunctional epoxy resin. The aromatic ring or, in particular, the phenyl group has a stacking structure after curing, and thus facilitates formation of a pseudo-crosslinked structure by the epoxy resin in the cured product. Accordingly, the mechanical strength is likely increased, and the adhesion is likely increased as well. Preferably, the epoxy resin contains a polyfunctional epoxy resin, and the polyfunctional epoxy resin has an aromatic ring or, in particular, a phenyl group.

The molecular weight of the epoxy resin is preferably 200 or more, more preferably 250 or more, and even more preferably 280 or more. By regulating the molecular weight of the epoxy resin to a specific value or higher, an unnecessarily high crosslinking density can be prevented, and elongation of the cured product is readily enhanced. Also, the storage elastic modulus of the cured product is readily lowered, and expression (1) in the dynamic viscoelasticity measurement is

readily satisfied.

From the viewpoint of, for example, lowering the viscosity of the adhesive, the molecular weight of the epoxy resin to be used is, for example, 2000 or less, and preferably 1000 or less.

The epoxy resin is preferably liquid at room temperature (25°C).

The molecular weight of the epoxy resin described above, or the molecular weight of the curing agent described below, can be measured by, for example, a mass spectrometer (GC-MS or LC-MS).

The epoxy equivalent of the epoxy resin is preferably 1000 g/eq or less, more preferably 500 g/eq or less, and even more preferably 375 g/eq or less, and is preferably 100 g/eq or more, more preferably 125 g/eq or more, and even more preferably 140 g/eq or less.

(Curing agent)

The curing agent is not particularly limited as long as it reacts with the epoxy resin, and examples include amine curing agents, phenol curing agents, acid anhydride curing agents, and thiol curing agents. Among these, an amine curing agent is preferably used from the viewpoint of curability with the epoxy resin. An amine curing agent is a component that has an amino group and reacts with the epoxy resin to cure the adhesive.

The amine curing agent may be a polyamine such as a diamine or a triamine or may be a monoamine, and is preferably a polyamine such as a diamine or a triamine. The amine curing agent may be an aliphatic amine or an aromatic ring-containing amine.

The amine curing agent may be an amine having two or more active hydrogen atoms of amino groups, and is preferably an amine having three or more active hydrogen atoms of amino groups per molecule. The amine curing agent having three or more active hydrogen atoms of amino groups facilitates crosslinking, and thus the adhesion of the adhesive or the like is readily enhanced. In the amine having three or more active hydrogen atoms of amino groups per molecule, the number of active hydrogen atoms of amino groups is preferably four or more, and more preferably five or more. The upper limit of the number of active hydrogen atoms of amino groups is not particularly limited, and is, for example, 12, preferably 10, and more preferably 8.

Specific examples of the aliphatic amine include, but are not limited to, polyoxyalkylene polyamines such as polyoxyethylene diamine, poly(oxyethylene/oxypropylene) diamine, polyoxypropylene diamine, poly(oxybutylene/oxypropylene) diamine, polyethylene glycol bis(propylamine), trimethylolpropane poly(oxypropylene)triamine, glyceryl poly(oxypropylene)triamine; branched or linear alkanediamines such as 1,6-hexanediamine, 1,8-octanediamine, 1,9-nonanediamine, 1,10-decanediamine, 1,11-undecanediamine, 1,12-dodecanediamine, 1,14-tetradecanediamine, 1,16-hexadecanediamine, 1,18-octadecanediamine, 1,20-eicosanediamine, 2-methyl-1,5-diaminopentane, 2-methyl-1,8-octanediamine, 2-methyl-1,9-nonanediamine, and 2,7-dimethyl-1,8-octanediamine; and alicyclic polyamines such as 1,3-bis(aminomethyl)cyclohexane, 1,4-bis(aminomethyl)cyclohexane, cyclohexanediamine, methylcyclohexanediamine, and isophoronediamine.

The aromatic ring-containing amine may be, but is not limited to, an aromatic amine in which an amino group is directly bonded to an aromatic ring, such as m-phenylenediamine, p-phenylenediamine, tolylene-2,4-diamine, tolylene-2,6-diamine, mesitylene-2,4-diamine, mesitylene-2,6-diamine, 3,5-diethyltolylene-2,4-diamine, 3,5-diethyltolylene-2,6-diamine, biphenylenediamine, 4,4-diaminodiphenylmethane, 2,5-naphthylenediamine, or 2,6-naphthylenediamine, or an amine in which an amino group is not directly bonded to an aromatic ring, such as m-xylylenediamine, p-xylylenediamine, or a reaction product of m-xylylenediamine and styrene.

The amine curing agent may be polyamidoamine, ester amine, or the like.

Among the above amine curing agents, from the viewpoint of increasing the curing rate, aliphatic amines are preferable, in particular, polyoxyalkylene polyamines and branched or linear alkane diamines are more preferable, and from the viewpoint of further enhancing elongation, polyoxyalkylene polyamines are even more preferable. One amine curing agent may be used singly, or two or more may be used in combination.

The amine curing agent is preferably liquid at room temperature (25°C).

The active hydrogen equivalent of the amine curing agent is not particularly limited, and is, for example, 15 g/eq or more, preferably 25 g/eq or more, and more preferably 40 g/eq or more, and is, for example, 1000 g/eq or less, preferably 600 g/eq or less, and more preferably 300 g/eq or less.

The equivalent ratio (NH/Ep ratio) of the active hydrogen atoms of the amino group contained in the amine curing agent to the epoxy group contained in the epoxy resin is preferably more than 1 and 2.7 or less. When the equivalent ratio (NH/Ep ratio) is within this range, an unnecessarily high crosslinking density can be prevented, elongation of the cured product is readily enhanced, the storage elastic modulus and tan $\delta$ are readily regulated to the desired ranges, and thus expression (1) is readily satisfied.

From such viewpoints, the equivalent ratio (NH/Ep ratio) is more preferably 1.05 or more, even more preferably 1.1 or more, and even more preferably 1.2 or more. Also, the equivalent ratio (NH/Ep) is preferably 2.7 or less, more preferably 2.6 or less, and even more preferably 2.5 or less. Accordingly, the equivalent ratio (NH/Ep) is more preferably

1.05 to 2.7, more preferably 1.1 to 2.7, even more preferably 1.1 to 2.6, and yet more preferably 1.2 to 2.5.

When the adhesive has a content of a tri- or higher functional epoxy resin of less than 10% and a content of an amine curing agent having two primary amino groups and further having one or more reactive amino groups per molecule of 30% by mass or more (hereinafter also referred to as condition 1), the equivalent ratio (NH/Ep) from the viewpoint of enhancing adhesion is preferably more than 1, more preferably 1.20 or more, and even more preferably 1.50 or more. In the case of condition 1, the equivalent ratio (NH/Ep) from the viewpoint of enhancing adhesion is preferably 2.70 or less, more preferably 2.60 or less, and even more preferably 2.50 or less. Accordingly, the equivalent ratio (NH/Ep) in condition 1 is preferably more than 1 and 2.70 or less, more preferably 1.20 to 2.60, and even more preferably 1.50 to 2.50.

Here, the phrase "a content of a tri- or higher functional epoxy resin of less than 10% by mass" means that less than 10% by mass of all epoxy resins contained in the adhesive are tri- or higher functional epoxy resins (i.e., having three or more epoxy groups per molecule), and also encompasses a case of 0% by mass, i.e., no tri- or higher functional epoxy groups are contained.

Also, the phrase "a content of an amine curing agent having two primary amino groups and further having one or more reactive amino groups per molecule of 30% by mass or more" means that 30% by mass or more of all amine curing agents contained in the adhesive further have one or more reactive amino groups in addition to having two primary amino groups per molecule. Here, the reactive amino group is an amino group having an active hydrogen group, and may be a primary amino group or a secondary amino group. The following conditions 2 to 4 shall be interpreted likewise, and similar phrases shall also be interpreted accordingly.

When the adhesive has a content of a tri- or higher functional epoxy resin of 10% by mass or more and a content of an amine curing agent having two primary amino groups and further having one or more reactive amino groups per molecule of less than 30% by mass (hereinafter also referred to as condition 2), the equivalent ratio (NH/Ep) from the viewpoint of enhancing adhesion is preferably more than 1, more preferably 1.05 or more, and even more preferably 1.10 or more. In the case of condition 2, the equivalent ratio (NH/Ep) from the viewpoint of enhancing adhesion and elongation is preferably 2.00 or less, more preferably 1.80 or less, and even more preferably 1.60 or less. Accordingly, the equivalent ratio (NH/Ep) in the case of condition 2 is, for example, preferably more than 1 and 2.00 or less, more preferably 1.05 to 1.80, and even more preferably 1.10 to 1.60.

When the adhesive has a content of a tri- or higher functional epoxy resin of 10% by mass or more and a content of an amine curing agent having two primary amino groups and further having one or more reactive amino groups per molecule of 30% by mass or more (hereinafter also referred to as condition 3), the equivalent ratio (NH/Ep) is preferably more than 1, more preferably 1.05 or more, and even more preferably 1.10 or more. In condition 3, the equivalent ratio (NH/Ep) is preferably 2.70 or less, more preferably 2.60 or less, and even more preferably 2.50 or less. Accordingly, the equivalent ratio (NH/Ep) in condition 3 is preferably more than 1 and 2.70 or less, more preferably 1.05 to 2.60, and even more preferably 1.10 to 2.50.

When the adhesive has a content of a tri- or higher functional epoxy resin of less than 10% by mass and a content of an amine curing agent having two primary amino groups and further having one or more reactive amino groups per molecule of less than 30% by mass (hereinafter also referred to as condition 4), the equivalent ratio (NH/Ep) is preferably more than 1, more preferably 1.05 or more, and even more preferably 1.10 or more. In condition 4, the equivalent ratio (NH/Ep) is preferably 2.00 or less, more preferably 1.80 or less, and even more preferably 1.60 or less. Accordingly, the equivalent ratio (NH/Ep) in condition 4 is preferably more than 1 and 2.00 or less, more preferably 1.05 to 1.80, and even more preferably 1.10 to 1.60.

The equivalent ratio (NH/Ep) is synonymous with the ratio of the number of active hydrogen atoms of amino groups to the number of epoxy groups contained in the adhesive, and can be determined by calculating the equivalent of epoxy groups and the equivalent of active hydrogen atoms of amino groups as follows.

The equivalent of epoxy groups can be obtained by dividing the content (g) of the epoxy resin contained in the adhesive by the epoxy equivalent (g/eq). Note that when two or more kinds of epoxy resin are contained, the equivalent of epoxy groups can be obtained by summing the values obtained by dividing the content (g) of each epoxy resin by the epoxy equivalent (g/eq).

The equivalent of active hydrogen atoms of amino groups can be obtained by dividing the amine content (g) in the adhesive by the active hydrogen equivalent (g/eq) of amine. Note that when two or more kinds of amine are contained, the equivalent of active hydrogen can be obtained by summing the values obtained by dividing the content (g) of each amine by the active hydrogen equivalent (g/eq).

The epoxy equivalent (g/eq) can be obtained by dividing the molecular weight of the epoxy resin by the number of epoxy groups per molecule. The active hydrogen equivalent (g/eq) can be obtained by dividing the molecular weight of amine by the number of active hydrogen atoms per molecule. The molecular weight, the number of epoxy groups, and the number of active hydrogen atoms can be measured using a mass spectrometer (GC-MS or LC-MS). When only the molecular weight can be determined using a mass spectrometer, the number of epoxy groups and the number of active hydrogen atoms per molecule can be determined using NMR (such as 1H NMR) or the like. Note that, when the sample is a mixture, NMR is preferably performed after the components are separated by GPC (gel permeation chromatography) or

HPLC (high performance liquid chromatography).

When the structural formula of the epoxy resin is known, the molecular weight and the number of epoxy groups are the molecular weight and the number of epoxy groups of the epoxy resin that can be calculated from the structural formula, respectively. Also, when the structural formula of the amine is known, the molecular weight and the number of active hydrogen atoms are the molecular weight and the number of active hydrogen atoms of the amine that can be calculated from the structural formula, respectively.

The number of active hydrogen atoms in the amine shall be 1 in $NHR_2$ (secondary amino group) and 2 in $NH_2R$ (primary amino group) (provided that, in $NHR_2$ and $NH_2R$, R is a functional group other than active hydrogen, i.e., a part of the amine other than NH or $NH_2$).

The molecular weight of the curing agent is not particularly limited, and is preferably 300 or more, and more preferably 400 or more. By regulating the molecular weight of the curing agent to a specific value or higher, an unnecessarily high crosslinking density can be prevented, thus elongation is readily enhanced, also the storage elastic modulus is lowered, and thus expression (1) is readily satisfied.

From the viewpoint of lowering the viscosity of the adhesive, the molecular weight of the curing agent may be, for example, 3000 or less, and preferably 1500 or less.

The curing agent is preferably liquid at room temperature (25°C).

(Silicone-based binder)

The silicone-based binder may be any of a condensation curable silicone resin and an addition reaction curable silicone resin. The addition reaction curable silicone resin is preferably composed of a silicone resin that constitutes a base resin and a curing agent that cures the base resin, and, for example, in the case of an addition reaction curable silicone resin, organopolysiloxane having an alkenyl group is preferably used as a base resin, and organohydrogenpolysiloxane is preferably used as a curing agent.

The adhesive of the present invention preferably contains an organic polymer having a hydrolyzable silyl group as a binder. When the adhesive contains an organic polymer having a hydrolyzable silyl group, the adhesion of the cured product is readily regulated to a suitable range.

The hydrolyzable silyl group contained in the organic polymer can be hydrolyzed by water such as moisture to form silanol groups, and then silanol groups can undergo condensation polymerization with each other or with the hydrolyzable silyl group to form a siloxane bond. Accordingly, the organic polymer forms a crosslinked structure and cures, and thereby a rubber-like elastic body is obtained. The silanol group means a hydroxy group directly bonded to a silicon atom (Si-OH).

The hydrolyzable silyl group is a group in which 1 to 3 hydrolyzable groups are bonded to a silicon atom. The hydrolyzable group of the hydrolyzable silyl group is not particularly limited, and examples include a hydrogen atom, a halogen atom, an alkoxy group, an acyloxy group, a ketoximate group, an amino group, an amide group, an acid amide group, an aminooxy group, a mercapto group, and an alkenyloxy group.

In particular, the hydrolyzable silyl group is preferably an alkoxysilyl group because of its moderate hydrolysis reaction. Examples of the alkoxysilyl group include trialkoxysilyl groups such as a trimethoxysilyl group, a triethoxysilyl group, a triisopropoxysilyl group, and a triphenoxysilyl group; dialkoxysilyl groups such as a dimethoxymethylsilyl group and a diethoxymethylsilyl group; and monoalkoxysilyl groups such as a methoxydimethylsilyl group and an ethoxydimethylsilyl group. In particular, a dialkoxysilyl group is more preferable, and a dimethoxymethylsilyl group is particularly preferable.

The main chain of the organic polymer having a hydrolyzable silyl group may be linear or branched, and is preferably linear. That is to say, the organic polymer having a hydrolyzable silyl group of the present invention preferably has a hydrolyzable silyl group at the terminal of the linear main chain.

When the organic polymer having a hydrolyzable silyl group at the terminal is used, expression (1) is readily satisfied in dynamic viscoelasticity measurement, also the cured product readily stretches, and thus conformability is enhanced.

The terminal silylation rate of the organic polymer having a hydrolyzable silyl group is preferably 70% or more, more preferably 80% or more, and even more preferably 85% or more. When the terminal silylation rate is at a certain level or higher, it is easier to suitably regulate the curability and the stretchability of the adhesive. The terminal silylation rate means the ratio of silylated terminals to all terminals of the organic polymer having a hydrolyzable silyl group.

The terminal silylation rate is not particularly limited, is, for example, 100% or less, and can practically be 99% or less.

The terminal silylation rate of the organic polymer having a hydrolyzable silyl group can be determined by $^{1}$H-NMR.

The average number of hydrolyzable silyl groups per molecule of the organic polymer having a hydrolyzable silyl group is preferably 1 to 3. When the number of hydrolyzable silyl groups in the polymer is within this range, the curability

and the stretchability of the adhesive are favorable, and expression (1) is readily satisfied in dynamic viscoelasticity measurement.

The average number of hydrolyzable silyl groups per molecule of the organic polymer having a hydrolyzable silyl group can be calculated based on the concentration of hydrolyzable silyl groups in the organic polymer determined by $^1$H-NMR and the number average molecular weight of the polymer determined by GPC.

The method for introducing a hydrolyzable silyl group into an organic polymer is not particularly limited, and examples include (1) a method in which hydrosilane having a hydrolyzable silyl group is caused to act on, and thus hydrosilylate, an organic polymer modified with an unsaturated group within the molecule, (2) a method in which a compound having a mercapto group and a hydrolyzable silyl group is reacted with an organic polymer modified with an unsaturated group within the molecule, and (3) a method in which an organic polymer having a functional group within the molecule is reacted with a compound having a hydrolyzable silyl group and a functional group reactive to the aforementioned functional group. Specifically, a reaction between an isocyanate group and a hydroxyl group, a reaction between an isocyanate group and an amino group, a reaction between an isocyanate group and a mercapto group, or the like can be used.

The organic polymer of the organic polymer having a hydrolyzable silyl group is not particularly limited, and examples include polyalkylene oxides such as polyethylene oxide, polypropylene oxide, polybutylene oxide, polytetramethylene oxide, polyethylene oxide-polypropylene oxide copolymers, and polypropylene oxide-polybutylene oxide copolymers; saturated hydrocarbon-based polymers; copolymers of polychloroprene, polyisoprene, isoprene, or butadiene with acrylonitrile and/or styrene; copolymers of polybutadiene, isoprene, or butadiene with acrylonitrile and styrene; (meth)acrylate-based polymers obtained by radical polymerization of monomers such as ethyl (meth)acrylate and butyl (meth)acrylate; vinyl-based polymers obtained by radical polymerization of monomers such as vinyl acetate, acrylonitrile, and styrene; graft polymers obtained by polymerizing a vinyl monomer in the above polymers; polysulfide-based polymers; polyamide-based polymers such as nylon 6 obtained by ring-opening polymerization of ε-caprolactam, nylon 6,6 obtained by condensation polymerization of hexamethylenediamine and adipic acid, nylon 6,10 obtained by condensation polymerization of hexamethylenediamine and sebacic acid, nylon 11 obtained by condensation polymerization of ε-aminoundecanoic acid, nylon 12 obtained by ring-opening polymerization of ε-aminolaurolactam, and copolymer nylons having two or more such nylons; polycarbonate-based polymers produced by condensation polymerization of bisphenol A and carbonyl chloride; and diallyl phthalate-based polymers. Herein, (meth)acrylate means methacrylate or acrylate.

Among these organic polymers, polyalkylene oxide is preferable from the viewpoint of regulating adhesion and elongation after curing to the desired ranges. That is to say, the organic polymer having a hydrolyzable silyl group is preferably a polyalkylene oxide having a hydrolyzable silyl group. In particular, the polyalkylene oxide is especially preferably polypropylene oxide.

The number average molecular weight (Mn) of the organic polymer having a hydrolyzable silyl group is preferably 6000 or more, more preferably 10000 or more, and even more preferably 20000 or more. By regulating the number average molecular weight (Mn) of the organic polymer having a hydrolyzable silyl group to a specific value or higher, an unnecessarily high crosslinking density can be prevented, and elongation of the cured product is readily enhanced. In addition, the storage elastic modulus of the cured product is lowered, and expression (1) is readily satisfied.

The number average molecular weight (Mn) of the organic polymer having a hydrolyzable silyl group from the viewpoint of lowering the viscosity of the adhesive is, for example, 70000 or less, and preferably 50000 or less. When multiple organic polymers containing a hydrolyzable silyl group are used, the number average molecular weight (Mn) is the average of the number average molecular weights of the organic polymers used.

Herein, the number average molecular weight of the organic polymer having a hydrolyzable silyl group means a value in terms of polystyrene measured by GPC (gel permeation chromatography). In the measurement by GPC, for example, "ACQUITY APC system" manufactured by Waters and Shodex KF604 manufactured by Tosoh Corporation as a GPC column can be used, and measurement can be performed using tetrahydrofuran as a solvent at a column temperature of 40°C at a flow rate of 0.3 ml/min.

The polymer having a hydrolyzable silyl group may be a commercially available product. Examples of polyalkylene oxide-based polymers in which polypropylene oxide is the main chain skeleton, and a dimethoxysilyl group is at the terminal of the main chain skeleton, include those having product names "Exestar A2410" and "Exestar S4530" manufactured by Asahi Glass Co., Ltd., and product names "S203", "SAT350", and "SAX010" manufactured by Kaneka Corporation.

When the adhesive containing the organic polymer having a hydrolyzable silyl group is a two-component curable type, at least one of the first agent or the second agent may contain the organic polymer having a hydrolyzable silyl group, and preferably both the first agent and the second agent contain the organic polymer having a hydrolyzable silyl group. When the organic polymer having a hydrolyzable silyl group is contained in both the first agent and the second agent, the formulations of the first agent and the second agent are similar, so the difference between the viscosities of the two agents is reduced, the formulations likely become uniform during blending, and handleability is also enhanced.

(Urethane-based binder)

Examples of the urethane-based binder include those composed of a polyol compound as a base resin and a polyisocyanate compound as a curing agent. Accordingly, in the case of a two-component curable type, the first agent may contain a polyol compound, and the second agent may contain a polyisocyanate compound. Below, the urethane-based binder will now be described in detail.

(Polyol compound)

The polyol compound used in the present invention is not particularly limited, and examples include polyester polyol, polyether polyol, polycarbonate polyol, and polymer polyol.

The polyester polyol may be a polyester polyol having an aromatic ring, or may be an aliphatic polyester polyol. Examples of the polyester polyol include a polyester polyol obtained by reacting a polycarboxylic acid with a polyol, and a caprolactone polyol such as poly-ε-caprolactone polyol obtained by ring-opening polymerization of ε-caprolactone.

Examples of the polycarboxylic acid that is a feedstock of polyester polyol include divalent carboxylic acids such as phthalic acid, terephthalic acid, isophthalic acid, 1,5-naphthalic acid, 2,6-naphthalic acid, succinic acid, glutaric acid, adipic acid, pimelic acid, suberic acid, azelaic acid, sebacic acid, decamethylene dicarboxylic acid, and dodecamethylene dicarboxylic acid.

Examples of the polyol that is a feedstock of polyester polyol include diols such as ethylene glycol, propylene glycol, 1,3-propanediol, 1,4-butanediol, neopentyl glycol, 1,5-pentanediol, 1,6-hexanediol, diethylene glycol, and cyclohexanediol.

Examples of the polyether polyol include polyalkylene glycols such as polyethylene glycol, polypropylene glycol, polytrimethylene glycol, polytetramethylene glycol, polymethyltetramethylene glycol, and random copolymers or block copolymers of these alkylene glycols or derivatives thereof.

The polyether polyol may be a polyalkylene polyol obtained by ring-opening addition polymerization of an alkylene oxide (such as, ethylene oxide, propylene oxide, butylene oxide, or isobutylene oxide) to an initiator having two or more active hydrogen atoms. Specific examples of the initiator include aliphatic polyhydric alcohols, or more specifically, glycols such as ethylene glycol, propylene glycol, diethylene glycol, dipropylene glycol, 1,4-butanediol, 1,3-butanediol, 1,6-hexanediol, neopentyl glycol, cyclohexylene glycol, and cyclohexanedimethanol, triols such as trimethylolpropane and glycerin, tetrafunctional alcohols such as pentaerythritol, and higher-functional alcohols such as sucroses and sorbitols. Examples also include aliphatic amines, e.g., alkylenediamines such as ethylenediamine, propylenediamine, butylenediamine, hexamethylenediamine, and neopentyldiamine, and alkanolamines such as monoethanolamine and diethanolamine; and aromatic amines such as aniline, tolylenediamine, xylylenediamine, diphenylmethanediamine, and Mannich condensates. Moreover, it may be a bisphenol-type polyalkylene polyol obtained by addition reaction of an alkylene oxide to the active hydrogen moiety of a bisphenol-type molecular skeleton.

Examples of the polycarbonate polyol include poly(3-methyl-1,5-pentylene carbonate) diol, polypentamethylene carbonate diol, and polytetramethylene carbonate diol.

Examples of the polymer polyol include polymers obtained by graft polymerization of an ethylenically unsaturated compound such as acrylonitrile, styrene, methyl acrylate, or methacrylate to an aromatic polyol, an alicyclic polyol, an aliphatic polyol, or a polyester polyol; and hydrogenated products of polybutadiene polyol.

Examples of the aromatic polyol used in the production of the polymer polyol include bisphenol A, bisphenol F, phenol novolac, and cresol novolac. Examples of the alicyclic polyol used in the production of the polymer polyol include cyclohexanediol, methylcyclohexanediol, isophoronediol, dicyclohexylmethanediol, and dimethyldicyclohexylmethanediol. Examples of the aliphatic polyol used in the production of the polymer polyol include ethylene glycol, propylene glycol, butanediol, pentanediol, and hexanediol.

Among the above polyol compounds, a polyether polyol is preferable, and a polyalkylene glycol is more preferable. By using the polyether polyol, expression (1) is readily satisfied in the dynamic viscoelasticity measurement of the cured product of the adhesive, and stretchability is also enhanced.

The average molecular weight of the polyol compound is not particularly limited, and is preferably 300 or more, more preferably 500 or more, and even more preferably 700 or more. By increasing the average molecular weight of the polyol compound, expression (1) is readily satisfied in the dynamic viscoelasticity measurement of the cured product of the adhesive, and also the value of shear elongation can be increased. The average molecular weight of the polyol compound is not particularly limited, and is, for example, 20000 or less, preferably 10000 or less, more preferably 5000 or less, and even more preferably 3500 or less.

The average molecular weight of the polyol compound can be determined by measuring the hydroxyl value (mgKOH/g) and assigning it to the following formula:

$$\text{Average molecular weight} = \text{Hydroxyl value} \times N \times 1000 / 56.11$$

N: Average number of functional groups in polyol

The hydroxyl value can be measured in accordance with JIS K 1557-1.

(Polyisocyanate compound)

Examples of the polyisocyanate compound include aromatic polyisocyanate compounds and aliphatic polyisocyanate compounds.

Examples of the aromatic polyisocyanate compounds include diphenylmethane diisocyanate, tolylene diisocyanate, and naphthalene-1,5-diisocyanate.

Examples of the aliphatic polyisocyanate compounds include hexamethylene diisocyanate, trimethylhexamethylene diisocyanate, lysine diisocyanate, norbornane diisocyanate, transcyclohexane-1,4-diisocyanate, isophorone diisocyanate, hydrogenated xylylene diisocyanate, hydrogenated diphenylmethane diisocyanate, cyclohexane diisocyanate, bis(isocyanatemethyl)cyclohexane, and dicyclohexylmethane diisocyanate.

The polyisocyanate compound may be a modified product of the above, may be a liquid modified product of diphenylmethane diisocyanate, may be polymeric MDI or the like, or may be a biuret, isocyanurate, or adduct of the above polyisocyanate compound.

(Acryl-based binder)

The acryl-based binder is a component that constitutes an acryl-based polymer by being cured, and examples include various acryl-based compounds such as alkyl (meth)acrylate, hydroxyalkyl (meth)acrylate, (meth)acrylic acid, (meth)acrylamide, and urethane (meth)acrylate. Also, the acryl-based binder may contain a vinyl monomer that is copolymerizable with the acryl-based compounds. Moreover, the acryl-based binder may be at least partially a polymer of an acryl-based compound, or a copolymer of an acryl-based compound and a vinyl monomer.

<Thermally conductive filler>

The adhesive of the present invention contains a thermally conductive filler. Due to the thermally conductive filler contained, the thermal conductivity of the adhesive is improved. In the case of a two-component curable type, the thermally conductive filler may be contained in any of the first agent and the second agent, and is preferably contained in both the first agent and the second agent.

Examples of the thermally conductive filler include metals, metal oxides, metal nitrides, metal hydroxides, carbon materials, and non-metal oxides, nitrides, and carbides. The form of the thermally conductive filler may be spherical or a powder having an indefinite shape.

Examples of metals in the thermally conductive filler include aluminum, copper, and nickel, examples of metal oxides include aluminum oxide represented by alumina, magnesium oxide, and zinc oxide, and examples of metal nitrides include aluminum nitride. The metal hydroxide may be aluminum hydroxide. The carbon material may be spheroidal graphite. Examples of non-metal oxides, nitrides, and carbides include quartz, boron nitride, and silicon carbide. Among these, from the viewpoint of ensuring insulating properties, metal oxides, metal nitrides, metal hydroxides, carbon materials, and non-metal oxides, nitrides, and carbides are preferable, and, in particular, metal oxides and metal hydroxides are more preferable.

Among the above examples, aluminum oxide is preferable from the viewpoint of enhancing the heat dissipating properties of the thermally conductive member, and aluminum hydroxide is preferable when enhancing flame retardancy or when lowering the specific gravity of the inorganic filler to reduce the weight of the adhesive.

In order to achieve a high thermal conductivity while lowering the specific gravity of the adhesive for weight reduction, aluminum oxide and aluminum hydroxide are preferably used in combination. When using aluminum oxide and aluminum hydroxide in combination, the ratio (volume ratio) of the filling rate of aluminum hydroxide to the filling rate of aluminum oxide is preferably 0.1 or more and 30 or less, more preferably 0.2 or more and 15 or less, and even more preferably 0.3 or more and 10 or less.

One thermally conductive filler may be used singly, or two or more may be used in combination.

The average particle size of the thermally conductive filler is preferably 0.1 μm or more and 200 μm or less, more preferably 0.5 μm or more and 150 μm or less, and even more preferably 1 μm or more and 110 μm or less.

The thermally conductive filler is preferably a combination of a small particle size thermally conductive filler having an average particle size of 0.1 μm or more and 5 μm or less and a large particle size thermally conductive filler having an average particle size of more than 5 μm and 200 μm or less. By using thermally conductive fillers having different

average particle sizes, the filling rate can be increased.

The average particle size of thermally conductive fillers can be measured by observation under an electron microscope or the like. More specifically, for example, the particle sizes of randomly selected 50 thermally conductive filler particles are measured using an electron microscope or an optical microscope, and the average (arithmetic mean) thereof can be regarded as the average particle size.

The content (filling rate) of the thermally conductive filler in the adhesive is preferably 50% by volume or more based on the total volume of the adhesive. When the content is at the lower limit or above, a certain level of thermal conductivity can be imparted to the adhesive. From the viewpoint of further enhancing the thermal conductivity, the content is more preferably 55% by volume or more.

The content of the thermally conductive filler in the adhesive is preferably 85% by volume or less based on the total volume of the adhesive. By regulating the content of the thermally conductive filler to the upper limit or below, the thermally conductive filler can be suitably dispersed in the adhesive, and an unnecessarily high viscosity of the adhesive can also be prevented. In addition, the storage elastic modulus of the cured product of the adhesive is readily lowered, expression (1) is readily regulated to the desired range, and, moreover, the value of shear elongation is readily increased. From these viewpoints, the content of the thermally conductive filler in the adhesive is more preferably 80% by volume or less, even more preferably 70% by volume or less, and even more preferably 60% by volume or less.

The content of the thermally conductive filler in the adhesive is not particularly limited and, when expressed in part by mass, is preferably 300 parts by mass or more and 3000 parts by mass or less, more preferably 400 parts by mass or more and 2000 parts by mass or less, even more preferably 450 parts by mass or more and 1500 parts by mass or less, and yet more preferably 500 parts by mass or more and 1300 parts by mass or less, based on total 100 parts by mass of the binder and the plasticizer.

<Plasticizer>

The adhesive of the present invention may contain a plasticizer. Due to the plasticizer contained in the adhesive, the storage elastic modulus is likely lowered, and the value of shear elongation is likely increased. Also, the viscosity is likely lowered, thus enhancing workability and the like.

The adhesive of the present invention preferably contains a plasticizer when the organic polymer having a hydrolyzable silyl group is used as a binder or when the urethane-based binder is used.

In the case of a two-component curable type, the plasticizer may be contained in any of the first agent and the second agent, and is preferably contained in both the first agent and the second agent.

Specific examples of the plasticizer include organic ester plasticizers such as monobasic organic acid esters and polybasic organic acid esters, organic phosphorus-based plasticizers such as organic phosphate plasticizers and organic phosphite plasticizers, sulfonamides, and epoxy-based plasticizers such as epoxidized soybean oil. The plasticizer is preferably an organic ester plasticizer.

Examples of the monobasic organic acid esters include glycol esters obtained by reacting glycols with monobasic organic acids. Examples of the glycols include triethylene glycol, tetraethylene glycol, and tripropylene glycol. Examples of the monobasic organic acids include butyric acid, isobutyric acid, caproic acid, 2-ethylbutyric acid, heptyl acid, n-octylic acid, 2-ethylhexanoic acid, n-nonylic acid, decylic acid, and benzoic acid.

Examples of the polybasic organic acid esters include ester compounds of polybasic organic acids and alcohols having a linear or branched structure with 3 to 10 carbon atoms. Examples of the polybasic organic acids include adipic acid, sebacic acid, azelaic acid, and 1,2-cyclohexanedicarboxylic acid.

Examples of the organic ester plasticizers include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2- ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, diisononyl 1,2-cyclohexanedicarboxylate, dihexyl adipate, dioctyl adipate, hexylcyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of a phosphoric acid ester and an adipic acid ester. Other organic ester plasticizers may be used as well. Adipic acid esters other than the above adipic acid esters may be used as well.

Examples of the organic phosphorus-based plasticizers include tributoxyethyl phosphate, isodecylphenyl phosphate, and triisopropyl phosphate.

The plasticizer is preferably a diester plasticizer represented by the following formula (1) or (2):

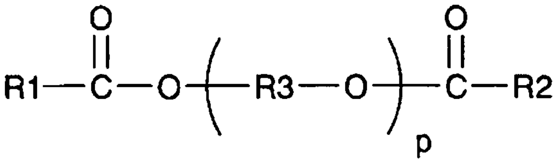

•••(1)

wherein R1 and R2 each represent an organic group having 2 to 10 carbon atoms, R3 represents an ethylene group, an isopropylene group, or a n-propylene group, and p represents an integer of 3 to 10. R1 and R2 in formula (1) are each preferably an organic group having 5 to 10 carbon atoms, and more preferably an organic group having 6 to 10 carbon atoms.

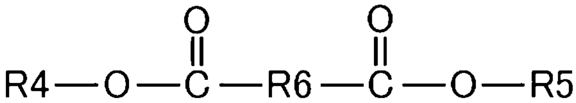

•••(2)

R4 and R5 in formula (2) each represent a hydrocarbon group having 3 to 10 carbon atoms, and R6 represents a hydrocarbon group having 2 to 10 carbon atoms. R4 and R5 in formula (2) each preferably have 4 to 9 carbon atoms, and more preferably have 6 to 9 carbon atoms. The hydrocarbon groups of R4 and R5 are each preferably an alkyl group. The alkyl group may be linear or branched. R6 preferably has 4 to 9 carbon atoms, and more preferably has 5 to 8 carbon atoms. The hydrocarbon group of R6 is preferably an aliphatic hydrocarbon group and, in particular, more preferably an unsaturated aliphatic hydrocarbon group. R6 may be linear or may have a branched or cyclic structure, and preferably has a cyclic structure.

The plasticizer preferably contains triethylene glycol di-2-ethylhexanoate (3GO), diisononyl 1,2-cyclohexanedicarboxylate (DINCH), triethylene glycol di-2-ethylbutyrate (3GH), or triethylene glycol di-2-ethylpropanoate. The plasticizer more preferably contains triethylene glycol di-2-ethylhexanoate (3GO), triethylene glycol di-2-ethylbutyrate (3GH), or diisononyl 1,2-cyclohexanedicarboxylate (DINCH), and even more preferably contains triethylene glycol di-2-ethylhexanoate or diisononyl 1,2-cyclohexanedicarboxylate (DINCH).

The content of the plasticizer in the adhesive is preferably 30 parts by mass or more and 300 parts by mass or less, more preferably 50 parts by mass or more and 200 parts by mass or less, and even more preferably 80 parts by mass or more and 180 parts by mass or less, based on 100 parts by mass of the binder. When the amount of the plasticizer is at these lower limits or above, the storage elastic modulus is readily lowered, and the value of shear elongation is likely increased. Also, the viscosity of the composition is lowered, thus enhancing workability. When the amount of plasticizer is at these upper limits or below, the amount of binder can be at a certain level or higher, thus enabling a certain number of points of reaction with the thermally conductive filler to be ensured, and adhesive strength is likely increased.

In the case of a two-component curable type, the plasticizer content in each of the first and second agents is also preferably within the above ranges.

Among the components other than the thermally conductive filler of the adhesive, the binder, or the binder and the plasticizer, may preferably be the main components, and the total amount of the binder and the plasticizer is, for example, 60 parts by mass or more and 100 parts by mass or less, preferably 70 parts by mass or more and 100 parts by mass or less, and more preferably 80 parts by mass or more and 100 parts by mass or less, based on 100 parts by mass of the components other than the thermally conductive filler of the adhesive.

In the case of a two-component curable type, the total amount of the binder and the plasticizer in each of the first and second agents is also preferably within the above ranges.

<Dispersant>

The adhesive of the present invention may contain a dispersant. Due to the dispersant contained, the thermally conductive filler is readily dispersed in the binder, and the filling rate of the thermally conductive filler is readily increased. The dispersant may be a polymer-based dispersant. The polymer-based dispersant may be a polymer compound having a functional group. Examples of the polymer compound include acryl-based, vinyl-based, polyester-based, polyurethane-based, polyether-based, epoxy-based, polystyrene-based, amino-based, and silicone-based compounds. Examples of the functional group include a carboxyl group, a phosphoric acid group, a sulfonic acid group, a carboxylic acid ester group, a phosphoric acid ester group, a sulfonic acid ester group, a hydroxyl group, an amino group, a quaternary ammonium salt group, and an amide group. A dispersant that is not a polymer dispersant may also be used and, for example, an alkoxysilane compound may also be used.

In the case of a two-component curable type, the dispersant may be contained in the one containing the thermally conductive filler among the first agent and second agent. Accordingly, the dispersant may be contained in any of the first

agent and the second agent, and is preferably contained in both the first agent and the second agent.

The content of the dispersant in the adhesive is preferably 0.1 parts by mass or more and 25 parts by mass or less, more preferably 0.5 parts by mass or more and 20 parts by mass or less, and even more preferably 1 part by mass or more and 10 parts by mass or less, based on 100 parts by mass of the binder.

By regulating the amount of the dispersant to these lower limits or above, the dispersibility of the thermally conductive filler is increased. By regulating the amount of the dispersant to these upper limits or below, the value of shear elongation can be increased, the storage elastic modulus is lowered, and expression (1) is readily satisfied.

In the case of a two-component curable type wherein the dispersant is contained in both the first agent and the second agent, the plasticizer content in each of the first and second agents is also preferably within the above ranges.

<Curing catalyst>

The adhesive may contain a curing catalyst that catalyzes the reaction of the binder. For example, when the organic polymer having a hydrolyzable silyl group is used as the binder, the adhesive preferably contains a silanol condensation catalyst. Due to the silanol condensation catalyst contained in the adhesive, the condensation polymerization of the hydrolyzable silyl group readily proceeds, and curability is enhanced.

In the case of a two-component curable type, the silanol condensation catalyst may be contained in any of the first agent and the second agent, and is preferably contained in the first agent but not in the second agent. This is because, as will be described below, water is suitably contained in the second agent and, in this case, if the silanol condensation catalyst is contained in the second agent, the organic polymer having a hydrolyzable silyl group undergoes a condensation reaction during storage, and storage stability is impaired.

Examples of the silanol condensation catalyst include organotin-based compounds such as dibutyltin dilaurate, dibutyltin oxide, dibutyltin diacetate, dibutyltin phthalate, bis(dibutyltin laurate) oxide, dibutyltin bis(acetylacetonate), dibutyltin bis(monoester malate), stannous octoate, dibutyltin octoate, dioctyltin oxide, dioctyltin diversatate, dioctyltin distearate, dibutyltin bis(triethoxysilicate), bis(dibutyltin bistriethoxysilicate) oxide, dibutyltin oxybisethoxysilicate, and 1,1,3,3-tetrabutyl-1,3-dilauryloxycarbonyl-distannoxane; and organotitanium-based compounds such as tetra-n-butoxytitanate and tetraisopropoxytitanate. One of these silanol condensation catalysts may be used singly, or two or more may be used in combination. Among the above silanol condensation catalysts, organotin-based compounds are preferable.

The content of the silanol condensation catalyst in the adhesive is preferably 1 part by mass or more and 10 parts by mass or less, and more preferably 1 part by mass or more and 6 parts by mass or less, based on 100 parts by mass of the organic polymer having a hydrolyzable silyl group. When the content of the silanol condensation catalyst is at these lower limits or above, the curing rate can be increased, and when the content of the silanol condensation catalyst is at these upper limits or below, deterioration of the storage stability of the composition can be suppressed.

<Water>

When the organic polymer having a hydrolyzable silyl group is used as a binder, the adhesive preferably contains water. Due to water contained in the adhesive, the reaction between the molecules of the organic polymer having a hydrolyzable silyl group is promoted, and the adhesive can be promptly cured to the inside thereof. In the case of a two-component curable type, water may be contained in any of the first agent and the second agent, and water is preferably contained in the second agent but not in the first agent. Accordingly, in the case of a two-component curable type, water can be prevented from coming into contact with the silanol catalyst before the first agent and the second agent are mixed. By causing the silanol condensation catalyst to be contained in the first agent and water to be contained in the second agent, curing can proceed more promptly.

The water content in the adhesive is preferably 0.1 parts by mass or more and 20 parts by mass or less, more preferably 0.5 parts by mass or more and 15 parts by mass or less, and even more preferably 1 part by mass or more and 10 parts by mass or less, based on 100 parts by mass of the organic polymer having a hydrolyzable silyl group.

<Dehydrating agent>

When the organic polymer having a hydrolyzable silyl group is used as a binder, the adhesive may contain a dehydrating agent. The dehydrating agent is preferably used in the case of a two-component curable type. The dehydrating agent used can prevent premature curing that may occur due to water unintentionally added before the first agent and the second agent are mixed.

In the case of a two-component curable type, the dehydrating agent may be contained in any of the first agent and the second agent, and is preferably contained in the first agent but not in the second agent. Accordingly, the dehydrating agent can be contained in the first agent, and water can be contained in the second agent. In this case, it is more preferable that the first agent further contains the silanol catalyst.

Examples of the dehydrating agent include silane compounds such as vinyltrimethoxysilane, dimethyldimethoxysilane, tetraethoxysilane, methyltrimethoxysilane, methyltriethoxysilane, tetramethoxysilane, phenyltrimethoxysilane, and diphenyldimethoxysilane; and ester compounds such as methyl orthoformate, ethyl orthoformate, methyl orthoacetate, and ethyl orthoacetate. One of these dehydrating agents may be used singly, or two or more may be used in combination. In particular, vinyltrimethoxysilane is preferable.

The content of the dehydrating agent in the adhesive is preferably 0.5 parts by mass or more and 20 parts by mass or less, and more preferably 1 part by mass or more and 10 parts by mass or less, based on 100 parts by mass of the organic polymer having a hydrolyzable silyl group contained in the adhesive. When the content of the dehydrating agent is at these lower limits or above, curing during storage is readily suppressed, and when the content of the dehydrating agent is at these upper limits or below, deterioration of curability resulting from the dehydrating agent can barely occur.

<Adhesion promoter>

The adhesive may contain an adhesion promoter, and preferably contains an adhesion promoter when the adhesive contains the organic polymer having a hydrolyzable silyl group. Due to the adhesion promoter contained in the adhesive, the adhesion of the cured product of the adhesive can be further enhanced. In the case of a two-component curable type, the adhesion promoter may be contained in any of the first agent and the second agent, and is preferably contained in the first agent but not in the second agent. This ensures good storage stability of the second agent even when water is contained in the second agent.

The adhesion promoter is preferably an aminosilane coupling agent. Specific examples of the aminosilane coupling agent include 3-aminopropyltrimethoxysilane, 3-aminopropylmethyldimethoxysilane, 3-aminopropyltriethoxysilane, N-(2-aminoethyl)-3-aminopropyltrimethoxysilane, N-(2-aminoethyl)-3-aminopropyltriethoxysilane, N,N'-bis-[3-(trimethoxysilyl)propyl]ethylenediamine, N,N'-bis-[3-(triethoxysilyl)propyl]ethylenediamine, N,N'-bis-[3-(methyldimethoxysilyl)propyl]ethylenediamine, N,N'-bis-[3-(trimethoxysilyl)propyl]hexamethylenediamine, and N,N'-bis-[3-(triethoxysilyl)propyl]hexamethylenediamine. In particular, N-(2-aminoethyl)-3-aminopropyltrimethoxysilane is preferable.

The content of the adhesion promoter in the adhesive is preferably 0.5 parts by mass or more and 20 parts by mass or less, and more preferably 1 part by mass or more and 10 parts by mass or less, based on 100 parts by mass of the binder. When the content of the adhesion promoter is at these lower limits or above, the adhesion of the cured product formed is likely enhanced, and when the content of the adhesion promoter is at these upper limits or below, the cured product formed can be prevented from being brittle and, accordingly, deterioration of adhesive strength can be suppressed.

<Other additives>

The adhesive of the present invention may contain additives other than those described above, and examples of such additives include reaction rate control agents that suppress the reaction between the base resin and the curing agent, thixotropy imparting agents, flame retardants, antioxidants, ultraviolet absorbers, pigments, anti-settling agents, colorants such as dyes, and compatibilizers. Examples of the compatibilizers include butyl carbitol and lower alcohols such as ethanol and isopropanol.

(Supply form)

The adhesive of the present invention may be in the form of a one-component type or a two-component type containing a first agent and a second agent, and the two-component type is preferable from the viewpoint of storage stability.

In the case of a two-component type, the adhesive may be cured by being mixed and left to stand at room temperature (25°C), or may be cured by being mixed and then heated. On the other hand, in the case of a one-component type, the adhesive may be cured by being heated, may be cured by light, or may be cured by moisture. When cured by being heated, the adhesive may be heated to, for example, about 50 to 300°C.

In a two-component adhesive, the mass ratio of the first agent to the second agent (second agent/first agent) may be, for example, 0.25 or more and 4 or less, and is preferably 1 or a value close to 1, and, specifically, preferably 0.8 or more and 1.2 or less, more preferably 0.9 or more and 1.1 or less, and even more preferably 0.95 or more and 1.05 or less. Thus, regulating the mass ratio of the first agent to the second agent to 1 or a value close to 1 facilitates the preparation of the adhesive.

In a two-component adhesive, the first agent and the second agent are both preferably liquid at room temperature (25°C) from the viewpoint of handleability.

In the case of a two-component adhesive in which the binder is an epoxy-based or urethane-based binder, the

first agent preferably contains an epoxy resin or a polyol compound, and the second agent preferably contains a curing agent such as an amine curing agent or a polyisocyanate compound. Preferably, in a two-component adhesive, the first agent contains an epoxy resin or a polyol compound, but does not contain a curing agent such as an amine curing agent or a polyisocyanate compound. However, the first agent may contain a curing agent such as an amine curing agent or a polyisocyanate compound as long as the curing agent does not react with the epoxy resin or polyol compound contained. On the other hand, preferably the second agent contains a curing agent such as an amine curing agent or a polyisocyanate compound, but does not contain an epoxy resin or a polyol compound. However, the second agent may contain an epoxy resin or a polyol compound as long as it does not react with the curing agent contained such as an amine curing agent or a polyisocyanate compound.

Moreover, when the binder is the organic polymer having a hydrolyzable silyl group, the organic polymer having a hydrolyzable silyl group is preferably contained in both the first agent and the second agent as described above.

The thermally conductive filler is preferably contained in both the first agent and the second agent as described above and, more preferably, the filling rates of the thermally conductive filler in the first agent and the second agent are approximately the same. Specifically, the ratio of the filling rate of the thermally conductive filler in the second agent to the filling rate of the thermally conductive filler in the first agent is preferably 0.67 or more and 1.5 or less, more preferably 0.83 or more and 1.2 or less, and even more preferably 0.91 or more and 1.1 or less. By regulating the filling rates of the thermally conductive filler in the first agent and the second agent to being approximately the same, the difference between the viscosities of the first agent and the second agent is readily reduced, and the mass ratio of the first agent to the second agent is readily brought close to 1. The filling rate of the thermally conductive filler in the first agent means the volume ratio (% by volume) of the filler to the total volume of the first agent. The same applies to the filling rate of the thermally conductive filler in the second agent.

In a two-component type, a plasticizer, a dispersant, a curing catalyst, water, a dehydrating agent, an adhesion promoter, and other additives may be contained in one or both of the first agent and the second agent as necessary, and the details of which are as described above.

When the adhesive is a two-component type, separate containers are preferably filled with the first agent and the second agent, and specifically a first container is filled with the first agent, and the second container is filled with the second agent. The first container and the second container may be separate bodies, or may be integrated into a single body. Integrating the first container and the second container into a single body facilitate the supplying of the first container and the second container as a container set to the demand destination. Herein, the first container filled with the first agent and the second container filled with the second agent may be collectively referred to as a container set.

Examples of containers include, but are not limited to, syringes, cartridges, pail cans, and drums. For example, when filling a syringe with the adhesive, the syringe is preferably a dual barrel syringe. A dual barrel syringe 30 has a first syringe 31 constituting a first container and a second syringe 32 constituting a second container that are parallelly integrated into a single body as shown in Fig. 1. A first agent 35 and a second agent 36 respectively provided in the syringes 31, 32 may be discharged from the syringes that serve as dispensers and mixed. A first agent 35 and a second agent 36 with which the syringes 31, 32 are filled respectively may be discharged from the syringes that serve as dispensers and mixed.

When using a cartridge, the container set may be composed of a first cartridge constituting the first container and a second cartridge constituting the second container, and such cartridges may be integrated into a single body. The cartridges may be usually attached to syringes (e.g., a first syringe and a second syringe) or the like, and the first agent delivered from the first cartridge and the second agent delivered from the second cartridge may be discharged from the respective outlets of the first syringe and the second syringe that serve as dispensers and mixed.

The first agent and the second agent may be mixed using a mixing apparatus such as a static mixer. For example, as shown in Fig. 1, a static mixer 38 is connected to an outlet 31A of a first syringe 31 and an outlet 32A of a second syringe 32, and is capable of mixing inside the mixer 38 a first agent 35 and a second agent 36 respectively discharged from the outlets 31A, 32A. The mixture (curable thermally conductive adhesive) obtained by being mixed in the mixer 38 may be discharged from an outlet 39 of the mixer 38.

The syringes 31, 32 may each have a structure in which the openings of barrels 33A, 34A respectively filled with the first agent 35 and the second agent 36 are closed by lids 33B, 34B. Concerning the syringe 30 shown in Fig. 1, the first agent 35 and the second agent 36 after the lids 33B, 34B are removed may be respectively discharged from the outlets 31A, 32A by being pushed by plungers (not shown) inserted through the openings.

When using pail cans, the container set may include a first pail can 41 that constitutes the first container and is filled with a first agent 45 and a second pail can 42 that constitutes the second container and is filled with a second agent 46 as shown in Fig. 2. For example, the pail cans 41, 42 respectively include container bodies 43A, 44A that are filled with the first agent 45 and the second agent 46, respectively, and have openings, and lids 43B, 44B for closing the openings of the container bodies 43A, 44A, respectively.

(Method for preparing adhesive)

When the adhesive of the present invention is a two-component type, the first agent and the second agent may be obtained by mixing the components constituting the first agent and the second agent, respectively. Similarly, the adhesive when being a one-component type may be obtained by mixing the components constituting the adhesive. The method for mixing the components is not particularly limited, and, for example, the adhesive may be prepared by adding components constituting a binder (such as a base resin and a curing agent), a thermally conductive filler, and, moreover, optionally used additives such as a plasticizer and a dispersant, and then stirring or kneading such components.

The thermally conductive filler may also be surface-treated with a dispersant before being mixed with the components constituting the binder. By being surface-treated with a dispersant in advance, the thermally conductive filler has a surface that is modified with the dispersant in advance. The thermally conductive filler that is surface-modified in advance may then be mixed with the components that constitute the binder to prepare the adhesive or the first or second agent of the adhesive.

The method for treating the surface with a dispersant in advance is not particularly limited, and a known method can be used such as a wet treatment method or a dry treatment method. In the wet treatment method, for example, the thermally conductive filler may be added to and mixed with a treatment liquid in which the dispersant is dispersed or dissolved in a solvent, and then the mixture may be dried, thermally treated, washed, or the like to cause the dispersant to be bonded or attached to the surface of the thermally conductive filler. The dry treatment method is a surface treatment method that does not involve a dispersion medium, and, specifically, the thermally conductive filler is added to the dispersant, and the mixture is stirred by a mixer or the like and then thermally treated to cause the dispersant to be bonded or attached to the surface of the thermally conductive filler.

[Thermally conductive member]

The adhesive of the present invention may be used as a thermally conductive member. The adhesive of the present invention becomes a thermally conductive member by being cured. The thermally conductive member of the present invention is formed of the cured product of the adhesive, and contains a polymer matrix and a thermally conductive filler. The polymer matrix is composed of a cured product obtained by curing a binder, and the thermally conductive filler is dispersed within the polymer matrix and retained by the polymer matrix. The thermally conductive member may be used by being disposed between two components such as a heating element and a heat dissipating element. Examples of the heating element include electronic parts that produce heat, such as a battery. Examples of the heat dissipating element include housings and cooling members such as a heat sink and a cooling plate.

[Applications]

The adhesive and the thermally conductive member of the present invention can be used in a variety of applications, for example, can be used for various electronic device applications, exemplified by battery assemblies such as lithium-ion battery (LiB) assemblies, power electronics, electronics packaging, LEDs, solar cells, and electrical grids. Among these, the adhesive and the thermally conductive member are preferably used in a battery assembly, and more preferably used in a LiB assembly. Accordingly, in a preferable embodiment of the present invention, a battery assembly provided with the above thermally conductive member is provided. The battery assembly such as a LiB assembly can be preferably used in automobiles such as electric vehicles.

In battery assembly applications, the adhesive or the thermally conductive member of the present invention is preferably used as a gap filler in a battery assembly. Also, the adhesive or the thermally conductive member of the present invention is, in one aspect, preferably used in a battery module, and more preferably used as a gap filler in a battery module. Below, an example in which the thermally conductive member of the present invention is applied to a battery module will now be described.

In one embodiment, the battery module includes a gap filler composed of the thermally conductive member, a plurality of battery cells, and a module housing accommodating the battery cells, wherein the gap filler is disposed inside the module housing. The gap filler composed of the thermally conductive material is provided between the battery cells and between the battery cells and the module housing, and the provided gap filler tightly adheres to the battery cells and the module housing. Accordingly, the gap filler between the battery cells functions to keep the battery cells apart from each other. Also, the gap filler between the battery cells and the module housing tightly adheres to both the battery cells and the module housing, and functions to transfer heat produced by the battery cells to the module housing.

Fig. 3 shows a specific configuration of a battery module. Fig. 4 shows a specific configuration of each battery cell. As shown in Fig. 3, a plurality of battery cells 11 are disposed inside a battery module 10. Each battery cell 11 is laminated with a flexible exterior film and encapsulated inside it, and the overall shape is a flat body that has a small thickness in relation to the height and width. As shown in Fig. 4, the battery cell 11 may be formed such that a positive electrode 11a and

a negative electrode 11b are exposed outside, and a central part 11c of the flat surface is thicker than a crimped edge 11d. Also, the surface of each battery cell 11 is preferably coated with a resin material. By coating the surface of each battery cell 10 with a resin material, insulating properties are readily ensured. The resin material is not particularly limited, and examples include polyester resins such as PET (polyethylene terephthalate), polyimide resins, olefin resins such as polypropylene resins, and polycarbonate resins, and PET is more preferable among these.

As shown in Fig. 3, the battery cells 11 are disposed such that their flat surfaces face each other. In the configuration of Fig. 3, the gap filler 13 is provided not to cover the entirety of the battery cells 11 accommodated inside the module housing 12. The gap filler 13 is provided so as to fill the gaps present in a portion (bottom part) inside the module housing 12. The gap filler 13 is provided between the battery cells 11 and between the battery cells 11 and the module housing 12, and tightly adheres to these portions of the surfaces of the battery cells 11 and the inner surface of the module housing 12.

The gap filler 13 provided between the battery cells 11 adheres to the surfaces of the battery cells 11, the gap filler 13 itself has suitable elasticity and flexibility, and thus even when external force that displaces the space between the battery cells 11 is applied, the gap filler 13 can mitigate strain/deformation caused by the external force. Accordingly, the gap filler 13 functions to keep the battery cells 11 apart from each other.

The gap filler 13 provided in a gap between the battery cells 11 and the inner surface of the module housing 12 also tightly adheres to the surfaces of the battery cells 11 and the inner surface of the module housing 12. As a result, heat produced inside the battery cells 11 is transferred via the gap filler 13 adhering to the surfaces of the battery cells 11 to the inner surface of the module housing 12 to which the other surface of the gap filler 13 tightly adheres.

The gap filler 13 can be formed in the battery module 10 by applying a liquid adhesive using a commonly used dispenser and then curing the liquid adhesive.

When forming the gap filler 13, the two-component adhesive described above is preferably used. The two-component adhesive is easy to store, is unlikely cured when applied using a dispenser when mixed immediately before use, and can promptly be cured after being applied. Also, application using a dispenser is preferable also in that the liquid adhesive can reach relatively deep inside the housing 12 of the battery module 10.

The gap filler 13 for covering the battery cells 11 preferably covers 20 to 40% of each battery cell 11 on one side of the battery cell 11. With a coverage of 20% or more, the battery cells 11 can be stably retained. Also, by sufficiently covering battery cells that produce a large amount of heat, heat dissipation efficiency is enhanced. On the other hand, with a coverage of 40% or less, heat produced from the battery cells 11 can be efficiently dissipated, and a weight increase, deterioration of workability, and the like can also be prevented. To enhance heat dissipation efficiency, it is preferable to cover the side of the battery cells 11 on which there are the electrodes 11a, 11b with the gap filler 13, and more preferable to cover the entirety of the electrodes 11a, 11b with the gap filler 13. As described above, the battery module 10 can cause heat produced from the battery cells 11 to escape to the module housing 12 via the gap filler 13.

The gap filler 13 is also preferably used in a battery pack including a plurality of battery modules 10 inside. A battery pack generally includes the battery modules 10 and a battery pack housing accommodating the battery modules 10. In the battery pack, the gap filler 13 can be provided between the battery modules 10 and the battery pack housing. Accordingly, heat that has escaped to the module housing 12 as described above can further escape to the battery pack housing, thus enabling effective heat dissipation.

While the battery assembly has been described so far in reference to a battery module or a battery pack including a battery module as an example, the present invention may be applied to a battery assembly having no battery module, and is also preferably applied to, for example, a battery assembly having a cell-to-pack structure.

Fig. 5 shows a schematic diagram of a battery assembly having a cell-to-pack structure. A battery assembly 20 having a cell-to-pack structure includes a plurality of battery cells 21 and a battery pack housing, and the battery cells 21 are bonded to a base member 25 constituting the battery pack housing via a gap filler 23 composed of a thermally conductive member (a cured product of the adhesive). The base member 25 may constitute a cooling plate or the like. The base member 25 composed of a cooling plate or the like may have an uneven surface, and the battery cells 21 may be bonded to the uneven surface of the base member 25 via the gap filler 23.

The gap filler 23 in the battery assembly 20 may be formed in the same manner as the formation of the gap filler 13 in the above battery module using, for example, a commonly used dispenser.

The adhesive of the present invention has sufficiently high adhesion after being cured, so it can also provide good adhesion between the battery cells 21 and the base member 25. The adhesive of the present invention is resistant to peeling even after undergoing repetitive temperature changes, and thus can be stably used.

The adhesive of the present invention can improve both reworkability and adhesion not only in the case of a cell-to-pack structure, but also in other battery assemblies such as the battery module shown in Fig. 3 and in components other than battery assemblies.

While examples have been described so far in which the surfaces of the battery cells 11, 21 are coated with a resin material, components other than the battery cells, e.g., the base member such as a cooling plate, the battery module, the module housing, and the battery pack housing, may be coated with a resin material or may be composed of a resin

material. In such a case as well, by using the adhesive of the present invention as a gap filler to be disposed between the components, the components can be suitably bonded to each other.

Examples

Below, the present invention will now be described in more detail by way of Examples, but the present invention is not limited to the Examples in any way.

In the Examples, the following methods were used to make evaluations.

<Dynamic viscoelasticity measurement>

An adhesive was applied to the surface of a silicone-based release treated PET film using an applicator such that the adhesive after being cured had a thickness of 1 mm. Thereafter, the adhesive applied to the silicone-based release treated PET film was cured in an environment having 60°C for 24 hours, and then the silicone-based release treated PET film was peeled off to give a sheet-like cured product. The resulting sheet-like cured product having a thickness of 1 mm was cut into a strip having 10 mm × 30 mm, which was then subjected to dynamic viscoelasticity measurement.

The dynamic viscoelasticity measurement was performed using a dynamic viscoelasticity analyzer ("DVA-200" manufactured by ITK Co., Ltd.) under tensile measurement conditions having a strain of 1%, a temperature range of 20°C to 80°C, a heating rate of 5°C/min, and a frequency of 0.1 Hz. The storage elastic modulus and the loss elastic modulus at 25°C were measured to also determine tan $\delta$.

A case where expression (1) was satisfied was evaluated as "A", and a case where expression (1) was not satisfied was evaluated as "B".

<Gelation point>

Immediately after adhesives were prepared based on the formulations of the Examples and Comparative Examples, measurement was initiated using a rheometer (rheometer "MCR-302e" manufactured by Anton Paar). The measurement was performed at a constant temperature of 50°C, and the time (minute) from the beginning of measurement to the appearance of a gelation point, at which the storage elastic modulus and the loss elastic modulus became equal, was measured.

<Adhesion, shear elongation>

The adhesion of each adhesive of the Examples and Comparative Examples was measured in accordance with DIN EN 1465 by the following method. A glass fiber-contained PET film ("Rynite FR530 PET", manufactured by Nippon Testpanel Co., Ltd.) having a width of 25 mm, a length of 100 mm, and a thickness of 2 mm and a cationic electrodeposition coated substrate (KLT plate, "material: SPCC-SD, specification: cationic electrodeposition coated (black)", manufactured by Nippon Testpanel Co., Ltd.) having a width of 25 mm, a length of 100 mm, and a thickness of 2 mm were provided.

The adhesive was then applied to one longitudinal end of the PET film over the entire width of the film to a length of 12.5 mm such that the thickness after curing was 2 mm. Then, the longitudinal end of the KLT plate was placed on top of the applied adhesive, and the plate was left to stand in this state in an environment having 60°C for 24 hours to cure the adhesive and give a measurement sample. One marker was given to the PET film of the measurement sample, and another marker was given to the KLT plate at a place 1 cm away from the aforementioned marker in the longitudinal direction.

A tensile shear test was performed on the resulting measurement sample wherein the measurement sample was pulled in the longitudinal direction in an environment having 25°C and 50% RH at a tensile speed of 10 mm/sec until it broke, and the breaking strength was regarded as "adhesion" (shear adhesion). Elongation at break was regarded as "elongation (shear elongation).

Shear elongation was calculated using a camera by observing the positions of the two markers when the measurement sample broke. This measurement method is not affected by, for example, the jig used to secure the measurement sample, and thus can measure shear elongation more accurately.

The tensile shear test was performed using "68TM-30" manufactured by Instron. The camera used was "AVE 2" manufactured by Instron.

The condition of the fractured part of the measurement sample after the tensile shear test was observed, and the failure mode were classified as follows:

(Failure mode)

Cohesion: Fractured part was near center relative to coating thickness.
Interfacial cohesion: Fractured part was near substrate surface.
Interfacial peeling: Peeling occurred without trace of residual adhesive or the like on substrate surface.

<Thermal conductivity>

The thermal conductivity of each adhesive of the Examples and Comparative Examples was determined by a method involving measuring thermal resistance using a measuring device in accordance with ASTM D5470-06.

Specifically, the adhesive was applied in an excessive amount so as to be larger than the thickness at the time of measurement such that the measurement die that served as a heating element was covered, then sandwiched with the heat dissipating element, and compressed with a load of 30 psi until the thickness of the adhesive became 1.0 mm, 1.5 mm, and 2.0 mm, and the thermal resistances at these thicknesses were measured. The thickness was regulated by a spacer. A graph depicting these three thermal resistance values was created, with the horizontal axis representing thickness and the vertical axis representing thermal resistance, and the least squares method was used to obtain an approximate straight line for the three points. The inclination of the approximate straight line was regarded as thermal conductivity.

The measurement of thermal resistance was performed at 55°C using LW-9389 manufactured by Long Win Science and Technology Corporation. The area of the measurement die was 1 inch × 1 inch.

<Thermal cycling>

Each adhesive obtained in the Examples and Comparative Examples was applied to a cationic electrodeposition coated substrate (KLT plate, "material: SPCC-SD, specification: cationic electrodeposition coated (black)", manufactured by Nippon Testpanel Co., Ltd.) having a length of 100 mm, a width of 25 mm, and a thickness of 2 mm, and then a glass fiber-contained PET film ("Rynite FR530 PET", manufactured by Nippon Testpanel Co., Ltd.) having a length of 100 mm, a width of 25 mm, and a thickness of 2 mm was placed on top of the applied adhesive. At that time, the adhesive was applied such that the thickness after curing was 2 mm. Then, the adhesive was cured at 60°C for 24 hours to prepare a measurement sample.

A thermal cycling test was performed on the measurement sample wherein one cycle consisting of retaining the measurement sample at -40°C for 30 minutes, heating it to 60°C in 1 minute, retaining it at 60°C for 30 minutes, and cooling it to -40°C in 1 minute was repeated multiple times. The interface between the cured product of the adhesive and the substrate was visually observed to check the number of cycles at which peeling occurred. A greater number of cycles at which peeling occurred means better thermal cycling properties. The tables indicate the number of cycles at which peeling occurred, and "none" means that no peeling occurred.

The thermal cycling test was performed up to 210 cycles.

<Cleanability>

An adhesive was applied so as to have a thickness of 1 mm to a cation-deposited substrate. With the adhesive being applied, the substrate was left to stand in an environment having 25°C and 50% RH for 24 hours to cure the adhesive, and used in a cleanability test as described below.

(First stage)

An experiment was conducted to determine whether it was possible to peel off the cured adhesive using a carbon scraper manufactured by Fujiwara Sangyo Co., Ltd., at an approach angle of approximately 45°.

(Second stage)

The adhesive residue or the like was repeatedly rubbed with a Kimwipe while applying pressure (swiping operation), and evaluations were made according to the number of repetitions as follows:

(Evaluation)

A: Possible to peel off adhesive in first stage without swiping.
B: Possible to peel off adhesive with less than 20 times of swiping.
C: Considerable force required and not possible to peel off by hand.

The components used in the Examples and Comparative Examples were as follows.

<Curable binder>

(Epoxy resin)

- Epoxy resin 1: Polyfunctional epoxy resin, bisphenol F epoxy resin, trade name "jER806", manufactured by Mitsubishi Chemical Corporation, molecular weight 330, epoxy equivalent 165 g/eq, number of functional groups 2
- Epoxy resin 2: Monofunctional epoxy resin, aliphatic glycidyl ether (C12 to 14 aliphatic alcohol), trade name "Epogosey ML", manufactured by Yokkaichi Chemical Co., Ltd., epoxy equivalent 282 g/eq, number of functional groups 1

(Amine curing agent)

- Amine curing agent 1: Trimethylolpropane poly(oxypropylene) triamine (trade name "T-403", manufactured by HUNTSMAN), molecular weight 440, active hydrogen equivalent 73.3 g/eq, number of active hydrogen atoms of amino groups = 6, functional group = 3 × ($-NH_2$)

(Organic polymer having hydrolyzable silyl group)

- Organic polymer having hydrolyzable silyl group 1: "MS Polymer SAT350" manufactured by Kaneka Corporation, number average molecular weight 6800, linear type, terminal silylation rate 91%, organic polymer having dimethoxymethylsilyl group at both terminals of polypropylene oxide
- Organic polymer having hydrolyzable silyl group 2: "MS Polymer SAX010" manufactured by Kaneka Corporation, number average molecular weight 2400, linear type, terminal silylation rate 94%, organic polymer having dimethoxymethylsilyl group at both terminals of polypropylene oxide
- Organic polymer having hydrolyzable silyl group 3: "S4530" manufactured by AGC Inc., number average molecular weight 25000, linear type, terminal silylation rate 86%, organic polymer having dimethoxymethylsilyl group at both terminals of polypropylene oxide

(Thermally conductive filler)

- Aluminum hydroxide 1: Average particle size: 1 μm
- Aluminum hydroxide 2: Average particle size: 10 μm
- Aluminum hydroxide 3: Average particle size: 105 μm
- Alumina 1: Average particle size: 12.5 μm
- Alumina 2: Average particle size: 42.8 μm
- Alumina 3: Average particle size: 80.7 μm

[Additives]
(Thixotropic agent)

- Amide wax: Kusumoto Chemicals Ltd. "Disparlon(R) 6650"

(Plasticizer)

- Triethylene glycol di(2-ethylhexanoate) 3GO

(Silanol condensation catalyst)

- Dibutyltin dilaurate

(Water)

- Water

(Dehydrating agent)

- Vinyltrimethoxysilane "KBM-1003" by manufactured by Shin-Etsu Silicone

(Adhesion promoter)

- N-(2-Aminoethyl)-3-aminopropyltrimethoxysilane "KBM-603" manufactured by Shin-Etsu Silicone

(Dispersant)

- Dispersant 1: "DISPERBYK-102" manufactured by BYK-Chemie
- Dispersant 2: "DISPERBYK-106" manufactured by BYK-Chemie

(Compatibilizer)
Butyl carbitol
(Antioxidant)

- SONGNOX 1010 manufactured by Songwon

<Examples 1 to 3, 5 to 6, Comparative Examples 1 to 3>

Adhesives were prepared according to the formulations of Tables 1 and 2, and various evaluations were made.

<Examples 4, 7>

According to the formulations of Tables 1 and 2, agent A and agent B were prepared. Then, agent A and agent B were mixed in a mass ratio of 1:1 to prepare an adhesive, and various evaluations were made.

Table 1

| | | | | Molecular weight | Specific gravity/unit | Specific gravity reciprocal number (for calculation) | Example 1 | Example 2 | Example 3 | Example 4 | | Comparative Example 1 | Comparative Example 2 |
|---|---|---|---|---|---|---|---|---|---|---|---|---|---|
| | | | Product name | | | | | | | A agent | B agent | | |
| Formulation (part by mass) | Binder | Epoxy resin 1 (polyfunctional epoxy resin) | jER806 | 330 | 1.20 | 0.83 | 3.96 | 3.82 | 3.69 | 7.92 | | 6.18 | 4.68 |
| | | Epoxy resin 2 (monofunctional epoxy resin) | Epogosey ML | 282 | 0.89 | 1.12 | 1.32 | 1.27 | 1.23 | 2.64 | | 2.06 | 1.56 |
| | | Amine curing agent 1 (trimethylolpropane poly(oxypropylene) triamine) | T-403 | 440 | 0.97 | 1.03 | 4.82 | 4.98 | 5.15 | | 9.64 | 2.11 | 3.94 |
| | Additive | Thixotropic agent (amide wax) | 6650 | | 1.00 | 1.00 | 0.06 | 0.06 | 0.07 | | 0.12 | 0.03 | 0.05 |
| | | Plasticizer | 3GO | | 0.97 | 1.03 | | | | | | | |
| | | Silanol condensation catalyst | | | 1.00 | 1.00 | | | | | | | |
| | | Water | Water | | 1.00 | 1.00 | | | | | | | |
| | | Dehydrating agent | KBM-1003 | | 0.90 | 1.11 | | | | | | | |
| | | Adhesion promoter | KBM-603 | | 1.00 | 1.00 | | | | | | | |
| | | Dispersant 1 | BYK-102 | | 1.00 | 1.00 | 0.26 | 0.26 | 0.26 | 0.26 | 0.25 | 0.26 | 0.26 |
| | | Dispersant 2 | BYK-106 | | 1.00 | 1.00 | | | | | | | |
| | | Compatibilizer | Butyl carbitol | | 1.00 | 1.00 | | | | | | | |
| | | Antioxidant | Songnox1010 | | 1.15 | 0.87 | | | | | | | |

(continued)

| | | | | Molecular weight | Specific gravity/unit | Specific gravity reciprocal number (for calculation) | Example 1 | Example 2 | Example 3 | Example 4 | | Comparative Example 1 | Comparative Example 2 |
|---|---|---|---|---|---|---|---|---|---|---|---|---|---|
| | | | Product name | | | | | | | A agent | B agent | | |
| | Thermally conductive filler | Aluminum hydroxide 1 | | | 2.42 | 0.41 | 14.14 | 14.14 | 14.15 | 14.08 | 14.20 | 14.11 | 14.13 |
| | | Aluminum hydroxide 2 | | | 2.42 | 0.41 | 18.86 | 18.87 | 18.87 | 18.78 | 18.95 | 18.82 | 18.85 |
| | | Aluminum hydroxide 3 | | | 2.42 | 0.41 | 37.72 | 37.73 | 37.74 | 37.56 | 37.89 | 37.63 | 37.69 |
| | | Alumina 1 | | | 3.96 | 0.25 | | | | | | | |
| | | Alumina 2 | | | 3.96 | 0.25 | 18.86 | 18.86 | 18.86 | 18.77 | 18.94 | 18.81 | 18.84 |
| | | Alumina 3 | | | 3.96 | 0.25 | | | | | | | |
| | Total | | | | - | | 100.00 | 100.00 | 100.00 | 100.00 | 100.00 | 100.00 | 100.00 |
| Formulation (% by volume) | Thermally conductive filler Total | | | | vol% | | 77.1% | 77.1% | 77.1% | 77.5% | 76.8% | 77.3% | 77.2% |
| | Alumina | | | | vol% | | 10.8% | 10.8% | 10.8% | 10.9% | 10.8% | 10.8% | 10.8% |
| | Aluminum hydroxide | | | | vol% | | 66.3% | 66.3% | 66.3% | 66.6% | 660% | 66.5% | 66.4% |
| | Resin | | | | vol% | | 22.9% | 22.9% | 22.9% | 22.5% | 23.2% | 22.7% | 22.8% |
| Specific gravity | Curable thermally conductive adhesive | | | | - | | 2.27 | 2.27 | 2.27 | 2.29 | 2.25 | 2.28 | 2.27 |
| AB | | | | | Mass ratio | | | | | 100 | 100 | | |
| NH/Ep ratio | | | | | | | 2.37 | 2.54 | 2.72 | 2.37 | | 0.66 | 1.64 |
| Evaluation | Thermal cycling test | Number of cycles at which peeling was confirmed for the first time | Up to 210 cycles | | | | 42 | 42 | 42 | 42 | | 12 | 16 |
| | Shear adhesion test (KTL and PET, 60°C 24h) | Shear elongation (mm) | | | | | 0.30 | 0.29 | 0.31 | 0.30 | | 0.16 | 0.22 |

(continued)

| | | | | Molecular weight | Specific gravity/unit | Specific gravity reciprocal number (for calculation) | Example 1 | Example 2 | Example 3 | Example 4 | | Comparative Example 1 | Comparative Example 2 |
|---|---|---|---|---|---|---|---|---|---|---|---|---|---|
| | | | Product name | | | | | | | A agent | B agent | | |
| | | Adhesion (Mpa) | | | | | 3.49 | 3.18 | 2.41 | 3.49 | | 2.58 | 6.01 |
| | | Failure mode | | | | | Cohesion | Cohesion | Cohesion | Cohesion | | Interfacial cohesion | Interfacial cohesion |
| | Thermal conductivity [W/m · K] | | | | | | 2.84 | 2.83 | 2.83 | 2.84 | | 2.87 | 2.86 |
| | Cleanability after 24 hours at room temperature | | | | | | B | C | A | B | | A | A |
| | Gelation point [min] | | | | | | 122.00 | 119.00 | 144.00 | 122.00 | | 219.00 | 300.00 |
| | Dynamic viscoelastic measurement (25°C, 0.1Hz) | Storage elastic modulus G' (Pa) | Storage elastic modulus G' | | | | $2.06\times10^{8}$ | $1.29\times10^{8}$ | $6.18\times10^{8}$ | $2.06\times10^{8}$ | | $2.38\times10^{8}$ | $2.33\times10^{9}$ |
| | | Loss elastic modulus G" (Pa) | Loss elastic modulus G" | | | | $1.40\times10^{8}$ | $8.38\times10^{7}$ | $3.45\times10^{7}$ | $1.40\times10^{8}$ | | $9.72\times10^{7}$ | $1.40\times10^{9}$ |
| | | tanδ | tanδ | | | | 0.68 | 0.65 | 0.56 | 0.68 | | 0.41 | 0.60 |
| | | A when expression (1) is satisfied, and B when not satisfied | | | | | A | A | A | A | | B | B |

Table 2

| | | | Product name | Molecular weight | Specific gravity/ unit | Specific gravity reciprocal number (for calculation) | Example 5 | Example 6 | Example 7 | | Comparative Example 3 |
|---|---|---|---|---|---|---|---|---|---|---|---|
| | | | | | | | | | A agent | B agent | |
| | | Organic polymer having hydrolyzable silyl group 1 | SAT350 | 6800 | 1.00 | 1.00 | 4.32 | | | | |
| | | Organic polymer having hydrolyzable silyl group 2 | SAX010 | 2400 | 1.00 | 1.00 | | | | | 4.13 |
| | | Organic polymer having hydrolyzable silyl group 3 | S4530 | 25000 | 1.00 | 1.00 | | 6.12 | 6.11 | 6.13 | |
| | Additive | Thixotropic agent (amide wax) | 6650 | | 1.00 | 1.00 | | | | | |
| | | Plasticizer | 3GO | | 0.97 | 1.03 | 6.65 | 8.31 | 7.86 | 8.75 | 4.65 |
| | | Silanol condensation catalyst | | | 1.00 | 1.00 | 0.13 | 0.17 | 0.35 | | 0.10 |
| | | Water | Water | | 1.00 | 1.00 | 0.07 | 0.09 | | 0.18 | 0.05 |
| | | Dehydrating agent | KBM-1003 | | 0.90 | 1.11 | 0.20 | 0.26 | 0.52 | | 0.15 |
| | | Adhesion promoter | KBM-603 | | 1.00 | 1.00 | 0.40 | 0.52 | 1.05 | | 0.31 |
| | | Dispersant 1 | BYK-102 | | 1.00 | 1.00 | | | | | |
| | | Dispersant 2 | BYK-106 | | 1.00 | 1.00 | | 0.17 | 0.17 | 0.18 | 0.99 |
| | | Compatibilizer | Butyl carbitol | | 1.00 | 1.00 | 0.33 | 0.44 | | 0.88 | |
| | | Antioxidant | Songnox1010 | | 1.15 | 0.87 | 0.07 | 0.09 | 0.18 | | 0.05 |
| | Thermally conductive filler | Aluminum hydroxide 1 | | | 2.42 | 0.41 | 10.65 | 12.48 | 12.47 | 12.50 | 11.36 |
| | | Aluminum hydroxide 2 | | | 2.42 | 0.41 | | | | | 14.97 |
| | | Aluminum hydroxide 3 | | | 2.42 | 0.41 | 29.27 | | | | 25.29 |
| | | Alumina 1 | | | 3.96 | 0.25 | 23.95 | 17.84 | 17.82 | 17.85 | |
| | | Alumina 2 | | | 3.96 | 0.25 | 23.95 | | | | 37.94 |
| | | Alumina 3 | | | 3.96 | 0.25 | | 53.51 | 53.46 | 53.55 | |
| | Total | | | | - | | 100.00 | 100.00 | 100.00 | 100.00 | 100.00 |

(continued)

| | | Product name | Molecular weight | Specific gravity/ unit | Specific gravity reciprocal number (for calculation) | Example 5 | Example 6 | Example 7 | | Comparative Example 3 |
|---|---|---|---|---|---|---|---|---|---|---|
| | | | | | | | | A agent | B agent | |
| Formulation (% by volume) | Thermally conductive filler Total | | | vol% | | 69.8% | 58.5% | 58.4% | 58.6% | 74.5% |
| | Alumina | | | vol% | | 29.5% | 45.5% | 45.4% | 45.6% | 23.1% |
| | Aluminum hydroxide | | | vol% | | 40.2% | 13.0% | 13.0% | 13.0% | 51.4% |
| | Resin | | | vol% | | 30.2% | 41.5% | 41.6% | 41.4% | 25.5% |
| Specific gravity | Curable thermally conductive adhesive | | | - | | 2.44 | 2.52 | 2.52 | 2.53 | 2.41 |
| AB | | | | Mass ratio | | | | 100 | 100 | |
| NH/Ep ratio | | | | | | - | - | - | - | - |

(continued)

| | | | | Molecular weight | Specific gravity/ unit | Specific gravity reciprocal number (for calculation) | Example 5 | Example 6 | Example 7 | | Comparative Example 3 |
|---|---|---|---|---|---|---|---|---|---|---|---|
| | | | Product name | | | | | | A agent | B agent | |
| Evaluation | Thermal cycling test | Number of cycles at which peeling was confirmed for the first time | Up to 210 cycles | | | | None | None | None | | 16 |
| | Shear adhesion test (KTL and PET, 60°C 24h) | Shear elongation (mm) | | | | | 0.94 | 3.71 | 3.71 | | 0.23 |
| | | Adhesion (Mpa) | | | | | 0.68 | 0.43 | 0.43 | | 0.85 |
| | | Failure mode | | | | | Interfacial cohesion | Cohesion | Cohesion | | Interfacial cohesion |
| | Thermal conductivity [W/m·K] | | | | | | 2.20 | 1.50 | 1.50 | | 2.50 |
| | Cleanability after 24 hours at room temperature | | | | | | A | A | A | | A |
| | Gelation point [min] | | | | | | 20.00 | 37.00 | 37.00 | | 20.00 |
| | Dynamic viscoelastic measurement (25°C, 0.1Hz) | Storage elastic modulus G' (Pa) | Storage elastic modulus G' | | | | $1.95\times10^{6}$ | $3.87\times10^{5}$ | $3.87\times10^{5}$ | | $4.69\times10^{7}$ |
| | | Loss elastic modulus G" (Pa) | Loss elastic modulus G" | | | | $3.16\times10^{5}$ | $4.70\times10^{4}$ | $4.70\times10^{4}$ | | $1.46\times10^{7}$ |
| | | $\tan\delta$ | $\tan\delta$ | | | | 0.16 | 0.12 | 0.12 | | 0.31 |
| | | A when expression (1) is satisfied, and B when not satisfied | | | | | A | A | A | | B |

Concerning the adhesives of Examples 1 to 7, cured products had an adhesion of 0.3 MPa or more, satisfied expression (1) in the dynamic viscoelasticity measurements as also shown Fig. 6, and, moreover, had a shear elongation of 0.25 mm or more and good results of the thermal cycling test.

Concerning the adhesives of Comparative Examples 1 to 3 on the other hand, cured products while having an adhesion of 0.3 MPa or more did not satisfy expression (1) in the dynamic viscoelasticity measurement, and, moreover, had a shear elongation of less than 0.25 mm and the results of the thermal cycling test inferior to those of the Examples.

Reference Signs List

10 Battery module
11, 21 Battery cell
12 Battery module housing (module housing)
13, 23 Gap filler
20 Battery assembly
25 Base member
30 Syringe
31 First syringe
31A Outlet of first syringe
32 Second syringe
32A Outlet of second syringe
33A, 34ABarrel
33B, 34B Barrel lid
35, 45 First agent
36, 46 Second agent
38 Mixer
39 Outlet of mixer
41 First pail can
42 Second pail can
43A, 44AContainer body having opening
43B, 44B Lid for closing opening of container body

## Claims

**1.** A curable thermally conductive adhesive comprising a curable binder and a thermally conductive filler,

a cured product obtained by curing the curable thermally conductive adhesive at 60°C for 24 hours having an adhesion of 0.3 MPa or more, and
the following expression (1) being satisfied when G' represents a storage elastic modulus, tan $\delta$ represents a loss tangent, and the storage elastic modulus and the loss tangent are obtained by subjecting the cured product to dynamic viscoelasticity measurement under conditions having a temperature of 25°C and a frequency of 0.1 Hz:

$$\text{Expression (1): } \log10(G') < 4.29 \times \tan\delta + 6.$$

**2.** A curable thermally conductive adhesive comprising a curable binder and a thermally conductive filler,

a cured product obtained by curing the curable thermally conductive adhesive at 60°C for 24 hours having an adhesion of 0.3 MPa or more, and
the cured product having a thickness of 2 mm having a shear elongation of 0.25 mm or more measured using a cationic electrodeposition coated substrate and a polyethylene terephthalate (PET) substrate.

**3.** The curable thermally conductive adhesive according to claim 1 or 2, wherein the cured product having a thickness of 2 mm has a shear elongation of 10.0 mm or less measured using a cationic electrodeposition coated substrate and a polyethylene terephthalate (PET) substrate.

4. The curable thermally conductive adhesive according to claim 1 or 2, wherein the cured product obtained by curing the curable thermally conductive adhesive at 60°C for 24 hours has an adhesion of 5 MPa or less.

5. The curable thermally conductive adhesive according to claim 1 or 2, wherein

the cured product having a thickness of 2 mm has a shear elongation of 0.29 mm or more and 3.71 mm or less measured using a cationic electrodeposition coated substrate and a polyethylene terephthalate (PET) substrate, and
the cured product obtained by curing the curable thermally conductive adhesive at 60°C for 24 hours has an adhesion of 0.43 MPa or more and 3.49 MPa or less.

6. The curable thermally conductive adhesive according to claim 1 or 2, wherein a failure mode of the cured product confirmed in a tensile shear test of the cured product having a thickness of 2 mm measured using a cationic electrodeposition coated substrate and a polyethylene terephthalate (PET) substrate is cohesive failure.

7. The curable thermally conductive adhesive according to claim 1 or 2, wherein a gelation point at which values of a storage elastic modulus and a loss elastic modulus are equal is confirmed at no less than 120 minutes from the beginning of measurement when measured using a rheometer at a constant temperature of 50°C.

8. The curable thermally conductive adhesive according to claim 1 or 2, wherein the curable binder is a binder comprising an epoxy resin and a curing agent, a binder comprising an organic polymer having a hydrolyzable silyl group, or a binder comprising a polyol and a polyisocyanate.

9. The curable thermally conductive adhesive according to claim 8, wherein the epoxy resin has a molecular weight of 200 or more.

10. The curable thermally conductive adhesive according to claim 8, wherein the curing agent has a molecular weight of 300 or more.

11. The curable thermally conductive adhesive according to claim 8, wherein the curing agent is an amine curing agent.

12. The curable thermally conductive adhesive according to claim 11, wherein an equivalent ratio (NH/Ep ratio) of active hydrogen atoms of amino group contained in the amine curing agent to epoxy groups contained in the epoxy resin is more than 1 and 2.7 or less.

13. The curable thermally conductive adhesive according to claim 8, wherein the organic polymer having a hydrolyzable silyl group has a number average molecular weight of 6000 or more.

14. The curable thermally conductive adhesive according to claim 8, wherein the organic polymer having a hydrolyzable silyl group is a polyalkylene oxide having a hydrolyzable silyl group.

15. The curable thermally conductive adhesive according to claim 1 or 2, wherein a content of the thermally conductive filler is 85% by volume or less.

16. The curable thermally conductive adhesive according to claim 1 or 2, comprising a first agent which comprises a base resin of the binder and with which a first container is filled, and a second agent which comprises a curing agent that cures when mixed with the first agent and with which a second container is filled.

17. A container set, which is filled with the curable thermally conductive adhesive according to claim 16, and comprises the first container filled with the first agent and the second container filled with the second agent.

18. A thermally conductive member formed of a cured product of the curable thermally conductive adhesive according to claim 1 or 2.

19. A battery assembly comprising the thermally conductive member according to claim 18.

Fig. 1

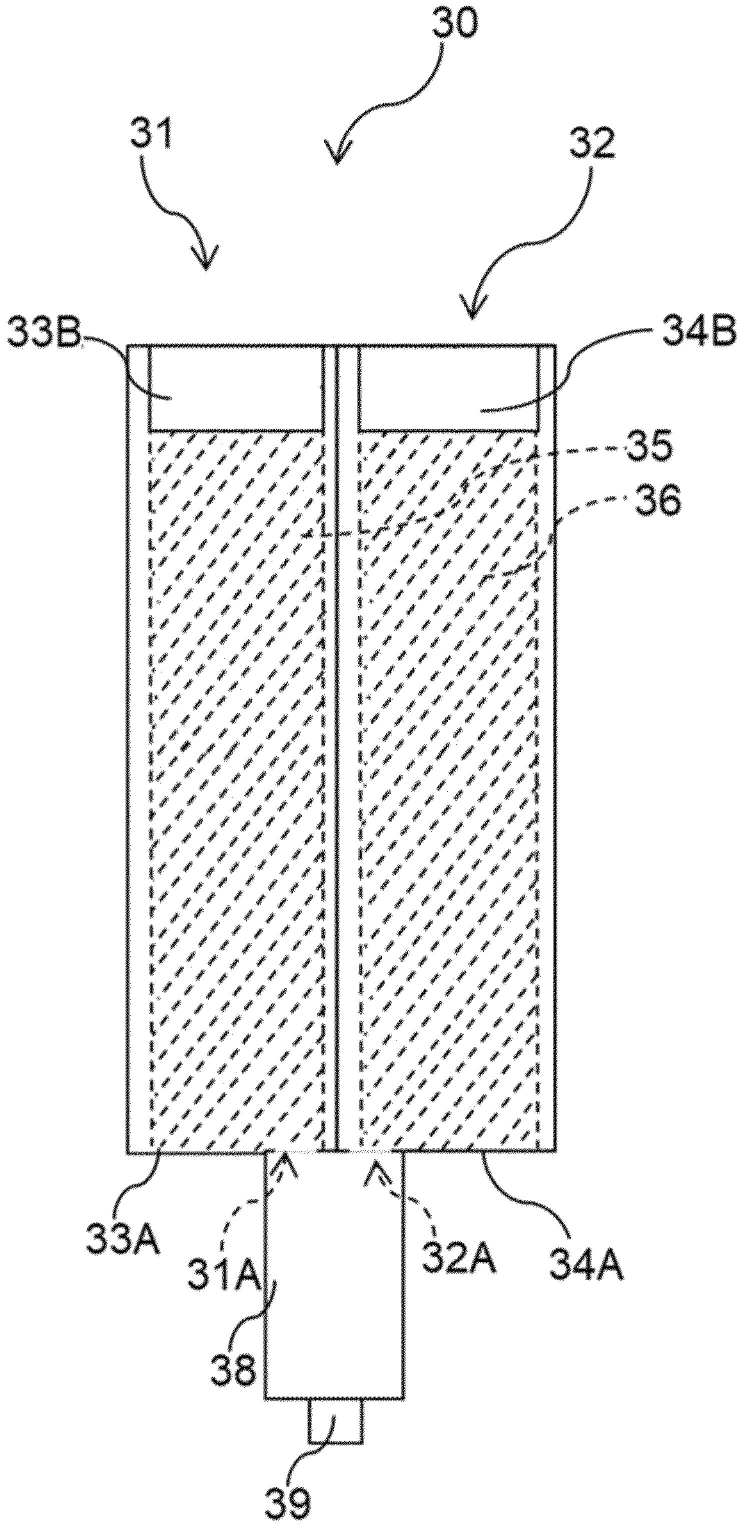

Fig. 2

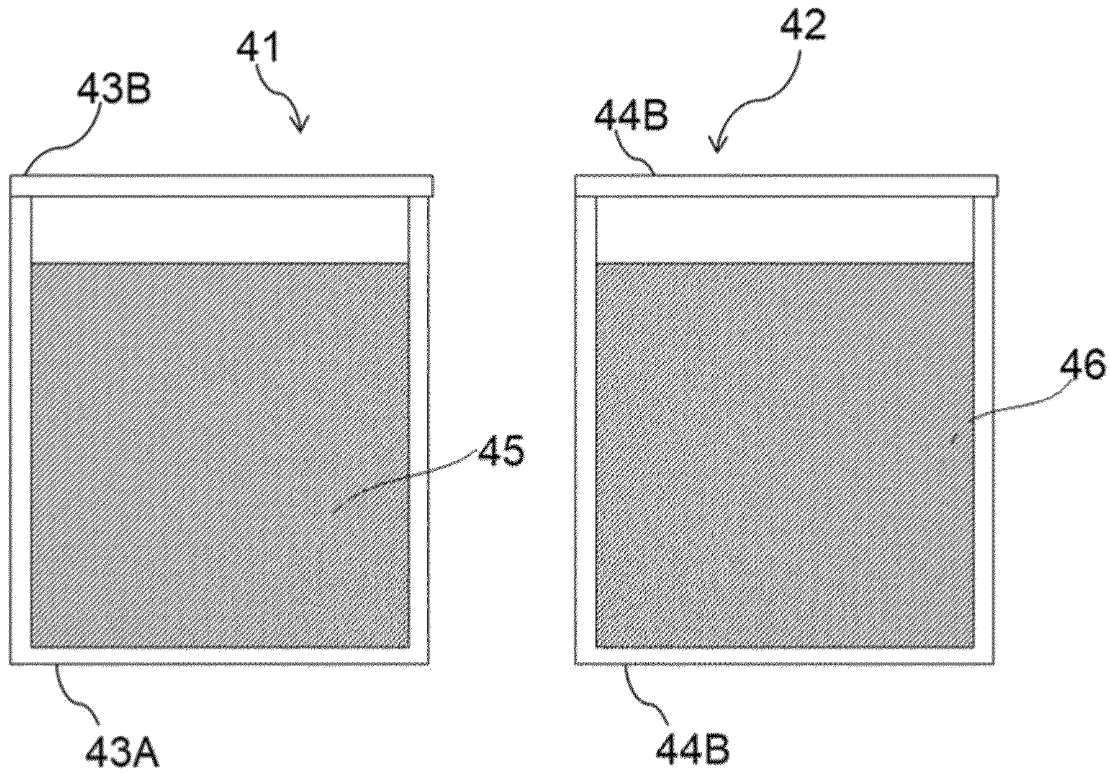


Fig. 3

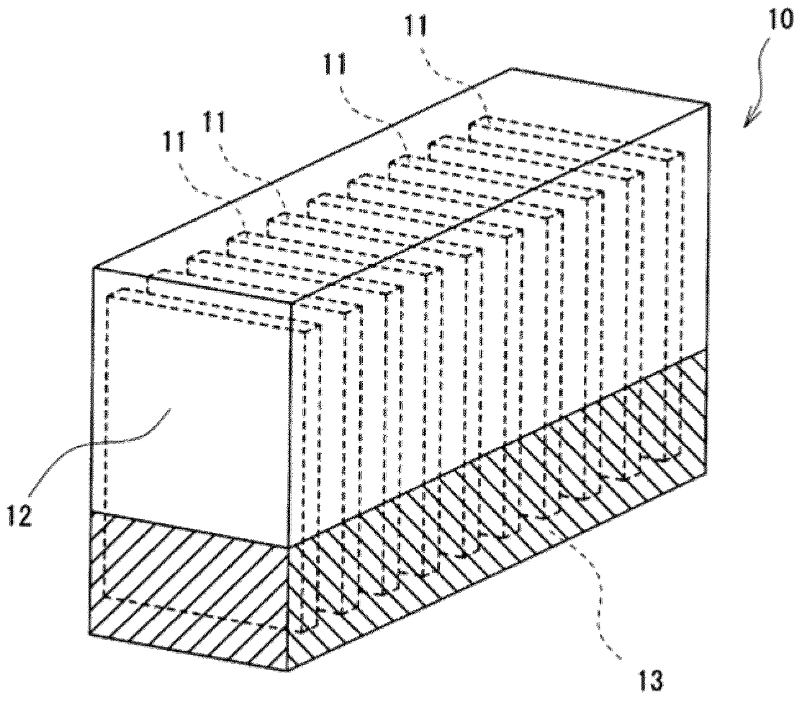

Fig. 4

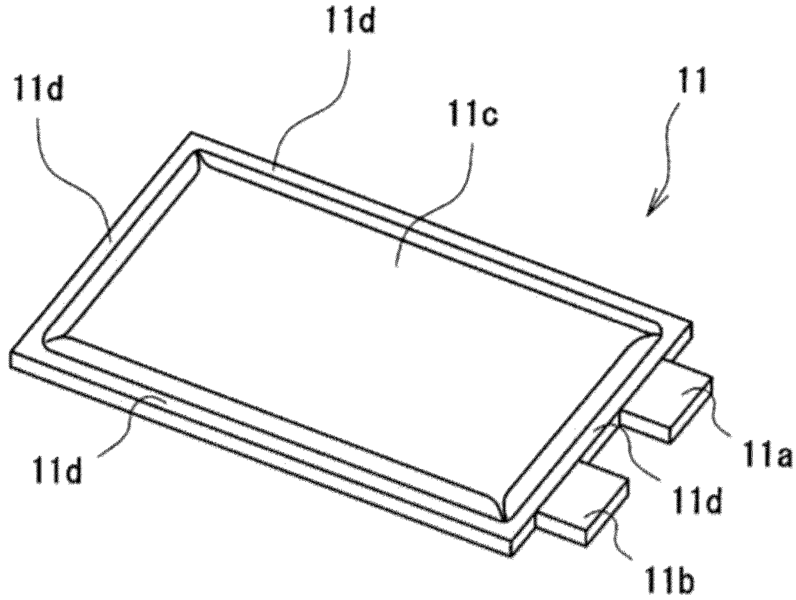


Fig. 5

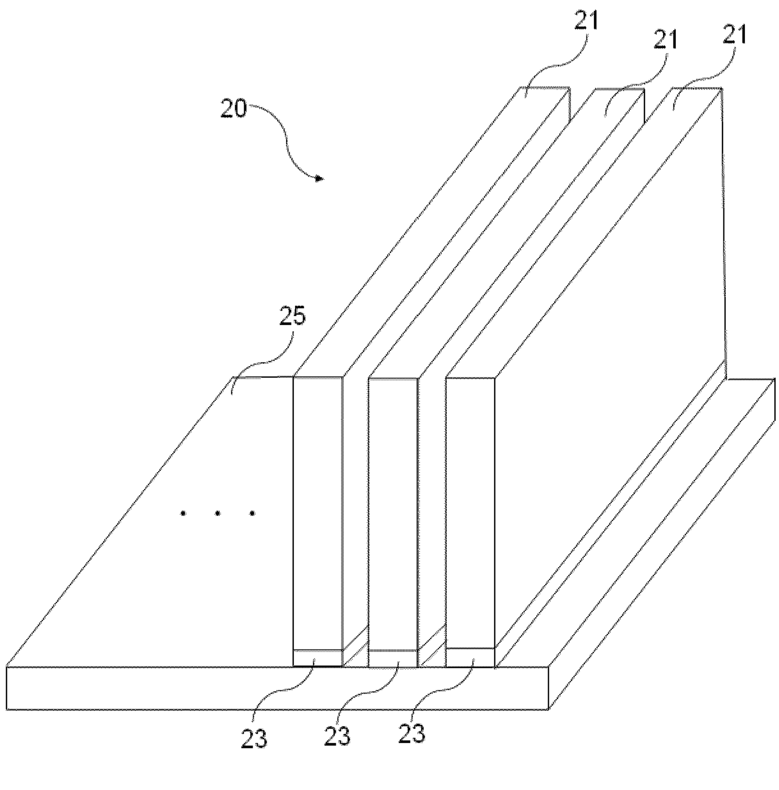

Fig. 6

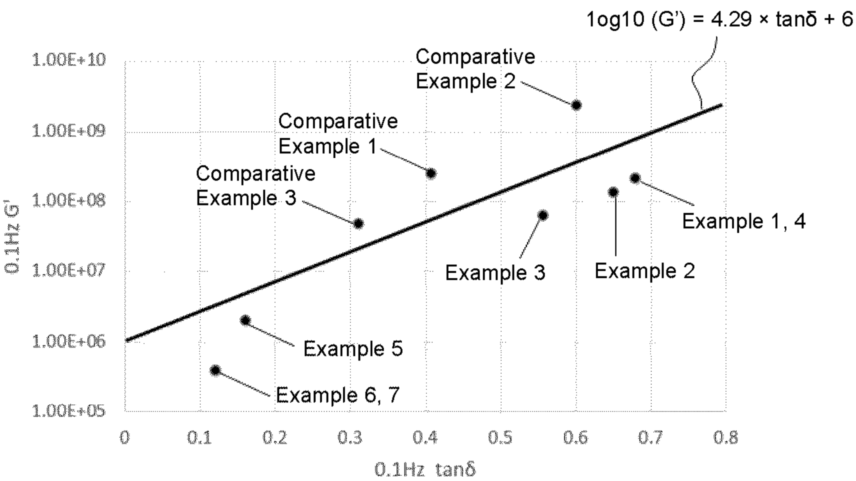
1og10 (G') = 4.29 × tanδ + 6
Comparative Example 2
Comparative Example 1
Comparative Example 3
Example 1, 4
Example 3
Example 2
Example 5
Example 6, 7
1.00E+10
1.00E+09
1.00E+08
1.00E+07
1.00E+06
1.00E+05
0.1Hz G'
0
0.1
0.2
0.3
0.4
0.5
0.6
0.7
0.8
0.1Hz tanδ

**INTERNATIONAL SEARCH REPORT**

International application No.
**PCT/JP2024/003186**

**A. CLASSIFICATION OF SUBJECT MATTER**

***C09J 201/10***(2006.01)i; ***C08G 59/40***(2006.01)i; ***C08G 59/50***(2006.01)i; ***C08K 3/013***(2018.01)i; ***C08K 3/20***(2006.01)i; ***C08K 3/22***(2006.01)i; ***C08K 5/17***(2006.01)i; ***C08L 63/00***(2006.01)i; ***C09J 9/00***(2006.01)i; ***C09J 11/04***(2006.01)i; ***C09J 11/06***(2006.01)i; ***C09J 163/00***(2006.01)i; ***C09J 171/02***(2006.01)i; ***C09J 201/00***(2006.01)i; ***C09K 5/14***(2006.01)i; ***H01M 10/60***(2014.01)i; ***H01M 10/65***(2014.01)i; ***H01M 10/653***(2014.01)i

FI: C09J201/10; C08G59/40; C08G59/50; C09J163/00; C09J11/06; C09J11/04; C08K5/17; C08K3/20; C08K3/013; C08K3/22; H01M10/60; H01M10/653; C09K5/14 E; C09J171/02; H01M10/65; C09J201/00; C08L63/00 C; C09J9/00

According to International Patent Classification (IPC) or to both national classification and IPC

**B. FIELDS SEARCHED**

Minimum documentation searched (classification system followed by classification symbols)

C09J1/00-5/10; C09J7/00-7/50; C09J9/00-201/10; C08G59/00-59/72; C08K3/00-13/08; C08L1/00-101/14; C09K5/00-5/20; H01M10/00-10/04; H01M10/06-10/34

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P, X | WO 2023/190722 A1 (SEKISUI POLYMATECH CO., LTD.) 05 October 2023 (2023-10-05) claims 1, 4-6, 10, 12-13, paragraphs [0001], [0006], [0009], [0012]-[0013], [0015]-[0023], [0030]-[0035], [0044], examples 1-4, 6-7 | 1-5, 8, 13-19 |
| P, A | | 6-7, 9-12 |
| A | JP 2004-99886 A (CITIZEN WATCH CO., LTD.) 02 April 2004 (2004-04-02) claims 1-4, paragraphs [0009], [0034], examples | 1-19 |
| A | JP 2015-143315 A (MITSUBISHI CHEMICAL CORPORATION) 06 August 2015 (2015-08-06) claims 1-6, paragraphs [0017], [0059], examples | 1-19 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 April 2024** | **07 May 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/003186**

**C. DOCUMENTS CONSIDERED TO BE RELEVANT**

| Category* | Citation of document, with indication, where appropriate, of the relevant passages | Relevant to claim No. |
|---|---|---|
| A | JP 2020-59818 A (TOAGOSEI CO., LTD.) 16 April 2020 (2020-04-16) claims 1-3, 8, paragraphs [0006], [0009], [0012]-[0015], [0023], examples | 1-19 |
| A | JP 2013-237778 A (CEMEDINE CO., LTD.) 28 November 2013 (2013-11-28) claims 1-3, paragraphs [0023]-[0032], [0037], examples | 1-19 |

Form PCT/ISA/210 (second sheet) (July 2022)

**INTERNATIONAL SEARCH REPORT**
**Information on patent family members**

International application No.
**PCT/JP2024/003186**

| Patent document cited in search report | Publication date (day/month/year) | Patent family member(s) | Publication date (day/month/year) |
|---|---|---|---|
| WO 2023/190722 A1 | 05 October 2023 | (Family: none) | |
| JP 2004-99886 A | 02 April 2004 | CN 1485391 A<br>claims 1-4, page 2, lines 11-17, page 5, lines 26-33, examples | |
| JP 2015-143315 A | 06 August 2015 | US 2016/0009947 A1<br>claims 1-6, paragraphs [0036], [0256], examples<br>CN 105073883 A<br>KR 10-2015-0136064 A | |
| JP 2020-59818 A | 16 April 2020 | (Family: none) | |
| JP 2013-237778 A | 28 November 2013 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022116587 A
- JP 2022521790 A
- JP 2023047595 A
- FR 530